(19) Europäisches Patentamt
European Patent Office
Office européen des brevets

(11) EP 4 151 693 A1

(12) **EUROPÄISCHE PATENTANMELDUNG**

(43) Veröffentlichungstag:
**22.03.2023 Patentblatt 2023/12**

(21) Anmeldenummer: **22192831.0**

(22) Anmeldetag: **30.08.2022**

(51) Internationale Patentklassifikation (IPC):
***C09J 7/25*** *(2018.01)* ***C09J 7/38*** *(2018.01)*
***C08K 5/00*** *(2006.01)*

(52) Gemeinsame Patentklassifikation (CPC):
**C09J 7/387; C09J 7/25;** C08K 5/0025;
C09J 2203/326; C09J 2301/302; C09J 2301/308;
C09J 2301/41; C09J 2301/412; C09J 2400/24;
C09J 2400/243; C09J 2453/00; C09J 2475/006

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **16.09.2021 DE 102021210261**

(71) Anmelder: **tesa SE**
**22848 Norderstedt (DE)**

(72) Erfinder:
- **CZERWONATIS, Franziska**
  **22393 Hamburg (DE)**
- **PITZER, Leonie**
  **22459 Hamburg (DE)**

(74) Vertreter: **tesa SE**
**Hugo-Kirchberg-Straße 1**
**22848 Norderstedt (DE)**

(54) **KLEBEBAND MIT VERNETZTEM POLYURETHANTRÄGER**

(57) Die vorliegende Erfindung betrifft ein wiederablösbares Klebeband mit einem Träger auf Basis eines vernetzten Polyurethans und einer Klebemasseschicht auf Basis von Vinylaromatenblockcopolymer, ein Verfahren zur Herstellung des Klebebands und die Verwendung des Klebebands in der Herstellung von elektronischen Bauteilen.



Processed by Luminess, 75001 PARIS (FR)

## Beschreibung

Die vorliegende Erfindung betrifft ein wiederablösbares Klebeband mit einem Träger auf Basis eines vernetzten Polyurethans und einer Klebemasseschicht auf Basis von Vinylaromatenblockcopolymer, ein Verfahren zur Herstellung des Klebebands und die Verwendung des Klebebands in der Herstellung von elektronischen Bauteilen.

Wiederablösbare Klebebänder sind im Markt seit langem etabliert und dem Fachmann bekannt.

So beschreibt EP 0 816 459 Klebfolienstreifen für eine wiederlösbare Verklebung mit einem Schichtaufbau aus einer elastischen Trägerschicht, die einseitig oder beidseitig mit einer Klebstoffschicht versehen ist, wobei sowohl die Trägerschicht als auch die Klebstoffschicht(en) als Basispolymere Styrolblockcopolymere enthalten, abgemischt mit Klebharzen, welche mit dem Elastomerblock der verwendeten Styrolblockcopolymere verträglich sind, die sich durch Ziehen in Richtung der Verklebungsebene rückstandsfrei und beschädigungslos ablösen lässt.

DE 10 2015 206 076 betrifft einen Haftklebestreifen aus einer oder mehreren Klebemasseschichten, die allesamt aus einer Haftklebemasse bestehen, die mit Mikroballons geschäumt ist, der sich durch dehnendes Verstrecken im Wesentlichen in der Verklebungsebene rückstands- und zerstörungsfrei wieder ablösen lässt. DE 10 2016 223 852 offenbart einen Haftklebestreifen, enthaltend zumindest eine Klebemasseschicht, die mit Mikroballons geschäumt ist und zumindest einen Träger B, der sich durch dehnendes Verstrecken im Wesentlichen in der Verklebungsebene rückstands- und zerstörungsfrei wieder ablösen lässt.

In neuerer Zeit haben wiederablösbare Klebebänder auch die Elektronikindustrie erobert, wo sie zum Verkleben von Bauteilen in elektronischen Geräten verwendet werden. Hier bietet sich allerdings die Schwierigkeit, dass eine Balance zwischen ausreichender Klebkraft und Wiederablösbarkeit des Klebebands gefunden werden muss, um eine Beschädigung der teils empfindlichen Bauteile beim Wiederablösen des Klebebands zu vermeiden.

WO 2015/135134 beschreibt ein durch Dehnung ablösbares Klebeband, das einen Träger und eine erste Schicht einer Haftklebemasse, die auf mindestens einer Oberfläche des Trägers aufgetragen ist, umfasst, wobei das Klebeband eine Dicke zwischen 0,05 und 0,1 mm und eine Längsdehnung von 850 bis 2200% aufweist, wobei das Klebeband fest mit einem Substrat verbunden und davon dadurch wieder abgelöst werden kann, dass es in einem Winkel von 90° oder mehr von der Oberfläche des Substrats abgezogen werden kann ohne zu reißen und ohne einen wesentlichen Rückstand auf dem Substrat zu hinterlassen, wobei der Haftkleber aus einem Acrylatcopolymer, welches endständige funktionelle Polyurethan-Gruppen enthält, geformt wird. Das Klebeband soll auch in elektronischen Geräten anwendbar sein.

Zwar sind die Klebebänder im Stand der Technik auch für elektronische Geräte ausgewiesen, weisen aber den Nachteil auf, dass teilweise hohe Kräfte zum Abziehen der Klebebänder aufgebracht werden müssen, so dass eine zerstörungsfreie Trennung von mit den Klebebändern verklebten Bauteilen nicht gewährleistet werden kann.

Vor diesem Hintergrund liegt der vorliegenden Erfindung die Aufgabe zugrunde, ein Klebeband zur Verfügung zu stellen, das mit einem relativ geringen Kraftaufwand wieder abgelöst werden kann, aber gleichzeitig über eine ausreichende Klebkraft verfügt, um eine belastbare Verbindung zwischen den zu verklebenden Bauteilen herzustellen.

Es wurde überraschend gefunden, dass diese Aufgabe durch ein Klebeband wie in Anspruch 1 definiert gelöst wird. Bevorzugte Weiterbildungen des erfindungsgemäßen Klebebands sind in den abhängigen Ansprüchen dargelegt.

Daher ist ein erster Gegenstand der vorliegenden Erfindung ein durch Dehnung lösbares Klebeband umfassend:

a) mindestens einen Träger auf Basis eines vernetzten Polyurethans; und

b) mindestens eine Haftklebemasseschicht auf Basis von Vinylaromatenblockcopolymer.

Im Rahmen der vorliegenden Erfindung wurde überraschend gefunden, dass das erfindungsgemäße Klebeband dem geltenden Vorurteil entgegen steht, dass durch die Vernetzung des Trägers dessen Dehnbarkeit verringert wird und sich die Kraft, die zum Ablösen des Klebebands aufgewendet werden muss, erhöht. Dieser Effekt konnte bei den erfindungsgemäßen Klebebändern nicht beobachtet werden. Vielmehr wurde gefunden, dass die erfindungsgemäßen Klebebänder eine gleichbleibend geringe Zugfestigkeit während des Ablösevorgangs bei gleichzeitig erhöhter maximaler Dehnung und maximaler Bruchkraft aufweisen, also ein geringer Kraftaufwand zum Ablösen der Klebebänder nötig ist und gleichzeitig wenig bis keine Reißer der Klebebänder in Applikationstests beobachtet wurden.

Die vorliegende Erfindung betrifft Klebebänder, die in beliebigen Konfektionsformen vorliegen können, wobei Klebebandrollen bevorzugt sind. Die Klebebänder, insbesondere in Bahnform, können entweder in Form von Rollen, also in Form von archimedischen Spiralen auf sich selbst aufgerollt, hergestellt werden oder als Klebestreifen, wie sie zum Beispiel in Form von Stanzlingen erhalten werden.

Die erfindungsgemäßen Klebebänder liegen insbesondere in Bahnform vor. Unter einer Bahn wird ein Objekt verstanden, dessen Länge (Erstreckung in x-Richtung) um ein Vielfaches größer ist als seine Breite (Erstreckung in y-Richtung) und die Breite entlang der gesamten Länge in etwa vorzugsweise genau gleichbleibend ausgebildet ist.

Der allgemeine Ausdruck "Klebeband", synonym auch "Klebestreifen" genannt, umfasst im Sinne dieser Erfindung alle flächigen Gebilde, wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Die Klebebänder weisen eine Längsausdehnung (x-Richtung) und eine Breitenausdehnung (y-Richtung) auf. Die Klebebänder weisen auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung der Klebebänder möglichst gleich, vorzugsweise exakt gleich.

Vorteilhaft können die äußeren, frei liegenden Flächen der Haftklebemasseschichten der erfindungsgemäßen Klebebänder mit antiadhäsiven Materialien ausgerüstet sein wie ein Trennpapier oder eine Trennfolie, auch Liner genannt. Bei einem Liner kann es sich auch um mindestens einseitig, vorzugsweise beidseitig, antiadhäsiv beschichtetes Material handeln, wie beispielsweise beidseitig silikonisiertes Material. Ein Liner, bzw. allgemeiner formuliert, ein temporärer Träger, ist nicht Bestandteil eines Klebebands, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden, sondern fungiert vielmehr als temporärer Träger, d.h. als Träger, der von der Klebstoffschicht abziehbar ist. "Permanente Träger" werden in der vorliegenden Anmeldung synonym auch einfach "Träger" genannt.

Da die erfindungsgemäßen Klebebänder Haftklebemassen enthalten, werden die erfindungsgemäßen Klebebänder auch als Haftklebebänder bezeichnet.

Wie beschrieben, lassen sich die erfindungsgemäßen Klebebänder durch Dehnung rückstands- und zerstörungsfrei wieder ablösen. Unter "rückstandsfreiem Ablösen" der Klebebänder ist erfindungsgemäß gemeint, dass sie beim Ablösen auf den verklebten Oberflächen der Bauteile keine Klebstoffrückstände hinterlassen. Ferner ist unter "zerstörungsfreiem Ablösen" der Klebebänder erfindungsgemäß gemeint, dass sie beim Ablösen die verklebten Oberflächen der Bauteile nicht beschädigen wie beispielsweise zerstören.

a) Träger

Das erfindungsgemäße Haftklebeband verwendet als Träger einen Träger auf Basis eines vernetzten Polyurethans. Der polyurethanbasierte Träger ist dabei vorzugsweise ein aus Extrusion hergestelltes (TPU) Polyurethan oder ein aus Dispersion (PUD) hergestelltes Polyurethan. Der Polyurethanträger kann auch aus Lösung hergestellt sein.

Der Träger weist vorzugsweise ein Verhältnis der Kraft bei 400% Dehnung $F_{400\%}$ zur Bruchkraft $F_{Bruch}$ von höchstens 45%, vorzugsweise höchstens 40% auf.

Der Vernetzer liegt vorzugsweise in einer Menge von 0,5 bis 10 Gew.-%, besonders bevorzugt 1,0 bis 8 Gew.-%, insbesondere 1,5 bis 5 Gew.-% vor, bezogen auf das Gesamtgewicht des Trägers.

Die erfindungsgemäße Trägerschicht weist geeignete mechanische Eigenschaften zur Verwendung in einem durch dehnendes Verstrecken ablösbaren Klebeband auf. Vorzugsweise weist die Trägerschicht in Längsrichtung eine Reißdehnung von mindestens 600%, besonders bevorzugt mindestens 800% auf.

Die Trägerschicht kann undurchsichtig, farbig, optisch klar oder transparent sein.

i) thermoplastisches Polyurethan (TPU)

In einer ersten Ausführungsform enthält der Träger des Klebebands mindestens eine, vorzugsweise genau eine, Schicht auf Basis von vernetztem thermoplastischem Polyurethan, die typischerweise mittels Extrusion hergestellt worden ist. Mit einer solchen Schicht auf Basis von thermoplastischem Polyurethan ist typischerweise eine Schicht gemeint, deren Anteil an thermoplastischem Polyurethan mindestens 50 Gew.-% beträgt. Vorzugsweise beträgt der Anteil an thermoplastischem Polyurethan in der Schicht mindestens 90 Gew.-%, insbesondere besteht die Schicht im Wesentlichen aus thermoplastischem Polyurethan.

Das vernetzte thermoplastische Polyurethan der mindestens einen Trägerschicht ist vorzugsweise Polyesterbasiert, kann aber alternativ auch Polyether-basiert sein, wie zum Beispiel auf Poly-THF als Polyol basieren. Das thermoplastische Polyurethan auf Polyesterbasis bzw. Polyetherbasis ist typischerweise thermoplastisches Polyurethan auf Basis von aliphatischem Polyester bzw. aliphatischem Polyether. Die Glasübergangstemperatur ($T_g$) der weichen Molekülkette des thermoplastischen Polyurethans liegt vorzugsweise zwischen -20 °C und 40 °C und die Glasübergangstemperatur der harten Molekülkette des thermoplastischen Polyurethans liegt vorzugsweise zwischen 60 bis 110 °C. Das thermoplastische Polyurethan hat typischerweise eine Reißfestigkeit von über 20, vorzugsweise über 35 MPa und die Shore-Härte A beträgt vorzugsweise zwischen 55 und 85, wie insbesondere zwischen 55 und 70. In einer alternativ bevorzugten Ausführungsform beträgt die Shore-Härte zwischen 70 und 85.

Das thermoplastische Polyurethan ist vorzugsweise ein Reaktionsprodukt eines Reaktionsgemisches, das mindestens ein Diisocyanat, mindestens ein Polyesterpolyol (oder Polyetherpolyol), einen Vernetzer und gegebenenfalls mindestens einen Kettenverlängerer enthält, wobei das Polyesterpolyol oder Polyetherpolyol typischerweise eine Schmelztemperatur von mindestens 30 °C hat, wie zum Beispiel mindestens 100 °C oder mindestens 200 °C. Die Wahl

eines geeigneten Verarbeitungsprozesses, wie z.B. der Abkühlbedingungen kann dazu beitragen, den Kristallisationsgrad der Schicht zu erhöhen. Der Kristallinitätsgrad kann durch Differentialscanningkalorimetrie (DSC) bestimmt werden und wird als Bruchteil der Kristallinität im thermoplastischen Polyurethanfilm ausgedrückt.

Der Anteil an Diisocyanat in dem Reaktionsgemisch beträgt vorzugsweise 0,5 bis 47 Gew.-%, bevorzugter 1 bis 40 Gew.-% und insbesondere 10 bis 25 Gew.-%. Die Menge des Diisocyanats im Reaktionsgemisch kann auch als Isocyanatindex ausgedrückt werden. Unter einem Isocyanatindex wird allgemein verstanden, dass er sich auf das Verhältnis der äquivalenten Menge der verwendeten funktionellen Isocyanatgruppen zur äquivalenten Menge der funktionellen Hydroxygruppen bezieht. Der Isocyanatindex des Reaktionsgemischs liegt vorzugsweise in einem Bereich von 0,99 bis 1,20, wie 1,00 bis 1,10.

Vorzugsweise handelt es sich bei dem Diisocyanat um ein Diisocyanat mit der Struktur gemäß Formel I

O=C=N-R-N=C=O (Formel I),

worin R ausgewählt ist aus substituiertem oder unsubstituiertem ($C_1$-$C_{40}$)-Alkylen, ($C_2$-$C_{40}$)-Alkenylen, ($C_4$-$C_{20}$)-Arylen, ($C_4$-$C_{20}$)-Arylen-($C_1$-$C_{40}$)-Alkylen-($C_4$-$C_{20}$)-Arylen, ($C_4$-$C_{20}$)-Cycloalkylen und ($C_4$-$C_{20}$)-Aralkylen. In weiteren Beispielen wird das Diisocyanat ausgewählt aus Dicyclohexylmethan-4,4'-diisocyanat, Isophorondiisocyanat, Hexamethylendiisocyanat, 1,4-Phenylendiisocyanat, 1,3-Phenylendiisocyanat, m-Xylylendiisocyanat, Toluylen-2,4-diisocyanat, Toluol-2,4-diisocyanat, Toluylen-2,6-diisocyanat, Poly(hexamethylendiisocyanat), 1,4-Cyclohexylendiisocyanat, 4-Chlor-6-methyl-1,3-phenylendiisocyanat, Hexamethylendiisocyanat, Diphenylmethan-4,4'-diisocyanat, 1,4-Diisocyanatobutan, 1,8-Diisocyanatooctan, 2,6-Toluoldiisocyanat, 2,5-Toluoldiisocyanat, 2,4-Toluoldiisocyanat, m-Phenylendiisocyanat, p-Phenylendiisocyanat, Methylenbis(o-chlorphenyldiisocyanat), Methylendiphenylen-4,4'-diisocyanat, (4,4'-Diisocyanato-3,3',5,5'-tetraethyl)diphenylmethan, 4,4'-Diisocyanato-3,3'-dimethoxy-biphenyl(o-dianisidindiisocyanat), 5-Chlor-2,4-toluoldiisocyanat, 1-Chlormethyl-2,4-diisocyanato-benzol, Tetramethyl-m-xylylendiisocyanat, 1,6-Diisocyanatohexan, 1,12-Diisocyanatododecan, 2-Methyl-1,5-diisocyanatopentan, Methylendicyclohexylen-4,4'-diisocyanat, 3-Isocyanatomethyl-3,5,5-trimethylcyclohexylisocyanat, 2,2,4-Trimethylhexyldiisocyanat oder einer Mischung davon.

Besonders bevorzugt wird als Diisocyanat Diphenylmethan-4,4'-diisocyanat (MDI), Hexandiisocyanat (HDI), Isophorondiisocyanat (IPDI) oder Hexamethylendiisocyanat (HMDI) eingesetzt.

Der Anteil an Polyesterpolyol oder Polyetherpolyol im Reaktionsgemisch liegt vorzugsweise im Bereich von 43 Gew.-% bis 70 Gew.-%, bevorzugter 50 Gew.-% bis 60 Gew.-%.

Das Polyesterpolyol kann eine beliebige geeignete Anzahl an Hydroxylgruppen enthalten. Beispielsweise kann das Polyesterpolyol vier Hydroxylgruppen oder drei Hydroxylgruppen enthalten. Das Polyesterpolyol kann sogar zwei Hydroxylgruppen enthalten, so dass das Polyesterpolyol ein Polyesterdiol ist. Im Allgemeinen kann das Polyesterpolyol ein Produkt einer Kondensationsreaktion wie einer Polykondensationsreaktion sein. Das Polyesterpolyol wird jedoch typischerweise nicht über ein Ringöffnungspolymerisationsreaktionsprodukt hergestellt.

In Beispielen, in denen Polyesterpolyol gemäß einer Kondensationsreaktion hergestellt wird, kann die Reaktion zwischen einer oder mehreren Carbonsäuren und einem oder mehreren Polyolen stattfinden. Beispiele geeigneter Carbonsäuren umfassen Carbonsäuren gemäß Formel IIa (Dicarbonsäuren) und IIb (Hydroxycarbonsäuren) mit den Strukturen:

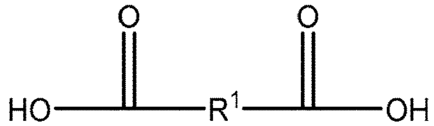
(Formel IIa)

In der Formel IIa wird $R^1$ typischerweise ausgewählt aus substituiertem oder unsubstituiertem ($C_1$-$C_{40}$)-Alkylen,($C_2$-$C_{40}$)-Alkenylen, ($C_4$-$C_{20}$)-Arylen, ($C_4$-$C_{20}$)-Cycloalkylen und ($C_4$-$C_{20}$)-Aralkylen.

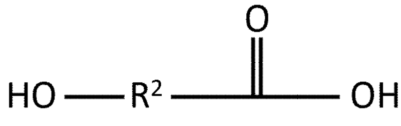

(Formel IIb)

In der Formel IIb wird $R^2$ typischerweise ausgewählt aus substituiertem oder unsubstituiertem ($C_1$-$C_{40}$)-Alkylen,($C_2$-$C_{40}$)-Alkenylen, ($C_4$-$C_{20}$)-Cycloalkylen und ($C_4$-$C_{20}$)- Aralkylen.

Beispiele für geeignete Carbonsäuren umfassen Milchsäure (2-Hydroxypropansäure), Bernsteinsäure (Butandisäure), 3-Hydoxybutansäure, 3-Hydroxypentansäure, Terephthalsäure (Benzol-1,4-Dicarbonsäure), Naphthalindicarbonsäure, 4-Hydroxybenzoesäure, 6-Hydroxynaphtalan-2-carbonsäure, Oxalsäure, Malonsäure (Propandisäure), Adipinsäure (Hexandisäure), Pimelsäure (Heptandisäure), Ethonsäure, Suberinsäure (Octandisäure), Azelainsäure (Nonandisäure), Sebacinsäure (Decandisäure), Glutarsäure (Pentandisäure), Dodecandisäure, Brassylsäure, Thapsinsäure, Maleinsäure, Fumarsäure, Glutaconsäure, 2-Decensäure, Muconsäure, Glutinsäure, Citraconsäure, Mesaconsäure, Itaconsäure, Äpfelsäure (2-Hydroxybutandisäure), Asparaginsäure (2-Aminobutandisäure), Glutaminsäure (2-Aminopentandisäure), Weinsäure, Weinsäure (2,3-Dihydroxybutandisäure), Diaminopimelinsäure, Saccharinsäure,, Mesoxalsäure, Oxalessigsäure, Acetonicarbonsäure (3-Oxopentandisäure), Arbinarinsäure, Phthalsäure, Isophtinsäure, 2,6-Naphtalendicarbonsäure oder eine Mischung davon. Besonders bevorzugt ist Adipinsäure.

Ein Beispiel eines geeigneten Polyols umfasst ein Polyol gemäß Formel III mit der Struktur:

$$HO - R^2 - OH \qquad \text{(Formel III)}$$

In der Formel III wird $R^2$ ausgewählt aus substituiertem oder unsubstituiertem ($C_1$-$C_{40}$)-Alkylen, ($C_2$-$C_{40}$)-Alkenylen, ($C_4$-$C_{20}$)-Arylen, ($C_1$-$C_{40}$)-Acylen, ($C_4$-$C_{20}$)-Cycloalkylen, ($C_4$-$C_{20}$)-Aralkylen und ($C_1$-$C_{40}$)-Alkoxylen.

Beispielsweise kann das Diol ein gewichtsmittleres Molekulargewicht in einem Bereich von 30 Dalton bis 250 Dalton liegen, vorzugsweise 50 Dalton bis 150 Dalton aufweisen. Die Diolkomponente kann eine beliebige geeignete Anzahl von Kohlenstoffen enthalten. Zum Beispiel kann das Diol eine zahlenmittlere Anzahl von 2 Kohlenstoffen bis 50 Kohlenstoffen, vorzugsweise 3 Kohlenstoffen bis 140 Kohlenstoffen aufweisen. Beispiele für geeignete Diole umfassen Ethylenglykol, Diethylenglykol, Triethylenglykol, Tetraethylenglykol, Propylenglykol, Dipropylenglykol, Tripropylenglykol, 1,3-Propandiol, 1,3-Butandiol, 1,4-Butandiol, Neopentylglykol, 1,6-Hexandiol, 1,4-Cyclohexan-dimethanol oder eine Mischung davon.

Besonders bevorzugte Polyesterpolyole sind entsprechend Polyalkylenadipate.

Zur Folienproduktion findet herkömmlich hauptsächlich der Blasfolien-Prozess von mehreren Schichten Anwendung. Hier werden eine PE-Schicht (d.h. Polyethylen-Schicht) und die eigentliche TPU-Schicht im Blasfolienprozess als coextrudierte Folie hergestellt (d.h. die PE-Schicht fungiert als Stützträger, der dem Extrudat die notwendige mechanische Stabilität gibt). Der PE-Stützträger wird in der Anwendung also vor der Herstellung des Klebebandes entfernt, d.h. stellt einen temporären Träger dar. Zur Herstellung einer entsprechenden Blasfolie sind aber zahlreiche Additive wie sogenannte Antiblockmittel (z.B. Silikat-Partikel) und Gleitwachse notwendig, um ein Verblocken der PU-Folie beim Zusammenlegen der Blase im Blasfolienprozess zu vermeiden. Das Problem ist hierbei, dass TPUs nach dem Aufschmelzen noch etwa 1h klebrig sind. Beide Tatsachen (kristalline Überstruktur und Additive vor allem Silikat-Partikel) führen zu einer negativen Beeinflussung der mechanischen Eigenschaften. Sowohl die Silikatpartikel in der Folie (= Fehlstellen) als auch die kristalline Überstruktur (= harte nicht flexible Domänen) führen zu einer geringeren Dehnbarkeit und vor allem zu einer höheren Reißerneigung in der Anwendung, d.h. beim dehnenden Verstrecken. Die Wachse führen durch Migration der Wachse an die PSA-Oberfläche, d.h. Oberfläche der Haftklebemasse zusätzlich zu Problemen mit Klebkraftreduktion sowie zu Schwierigkeiten der Verankerung der PSA auf der Folie. Vorteilhaft für eine hohe Dehnbarkeit und eine geringe Reißerneigung ist zusätzlich ein hohes Molekulargewicht des PU-Polymers zur Erhöhung der Zähigkeit der Folie.

Daher ist die TPU-basierte Trägerschicht vorzugsweise frei von Additiven wie Antiblockmitteln und Wachsen. Zudem weist das Polyurethan vorzugsweise keine kristalline Überstruktur auf, wie sie sich in einem DSC-Peak > 210 °C manifestiert.

Die TPU-basierte Trägerschicht ist in einer bevorzugten Ausführungsform geschäumt. Vorzugsweise erfolgt die Schäumung mit Mikroballons. Geeignete Mikroballons werden weiter unten beschrieben. Alternativ können auch chemische und/oder physikalische Treibmittel eingesetzt werden.

ii) mittels Dispersion erhaltenes Polyurethan (PUD)

In einer alternativ bevorzugten Ausführungsform enthält der Träger des erfindungsgemäßen Klebebands mindestens eine, vorzugsweise genau eine, Schicht auf Basis von vernetztem Polyurethan, das aus einer Dispersion mit einem Vernetzer hergestellt worden ist. Mit einer solchen Schicht auf Basis von Polyurethan ist typischerweise eine Schicht gemeint, deren Anteil an Polyurethan mindestens 50 Gew.-% beträgt. Vorzugsweise beträgt der Anteil an Polyurethan in der Schicht mindestens 90 Gew.-%. Das Polyurethan ist typischerweise thermoplastisch.

Das Polyurethan ist insbesondere aus mindestens einer Polyisocyanatkomponente und mindestens einer Polyolkomponente zusammengesetzt, d.h. das Reaktionsprodukt aus zumindest den genannten Komponenten.

Besonders bevorzugt ist dabei das Polyurethan aliphatisches Polyester-Polyurethan oder aliphatisches Polyether-Polyurethan, d.h. das Polyurethan basiert in diesem Fall auf aliphatischem Polyester oder aliphatischem Polyether.

Die mindestens eine Polyisocyanatkomponente ist vorzugsweise ein Diisocyanat. Zum Einsatz kommen können aromatische Diisocyanate wie Toluoldiisocyanat (TDI) (besonders bevorzugt), p-Phenylendiisocyanat (PPDI), 4,4'-Diphenylmethandiisocyanat (MDI), p,p'-Bisphenyldiisocyanat (BPDI), oder insbesondere aliphatische Diisocyanate, wie Isophorondiisocyanat (IPDI), 1,6-Hexamethylenediisocynat (HDI), oder 4,4'-Diisocyanatodicyclohexylmethan (H12MDI). Ebenso kommen Diisocyanate mit Substituenten in Form von Halo-, Nitro-, Cyano-, Alkyl-, Alkoxy-, Haloalkyl-, Hydroxyl-, Carboxy-, Amido-, Amino- oder deren Kombinationen in Frage.

Insgesamt können alle an sich bekannten aliphatischen, cycloaliphatischen, araliphatischen und vorzugsweise die aromatischen mehrwertigen Isocyanate zum Einsatz kommen.

Im Einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-1,4-diisocyanat, 2-Methyl-pentamethylen-1,5-diisocyanat, Tetramethylen-1,4-diisocyanat, und vorzugsweise Hexamethylen-1,6-diisocyanat; cycloaliphatische Diisocyanate wie Cyclohexan-1,3-diisocyanat und Cyclohexan-1,4-diisocyanat und beliebige Gemische dieser Isomeren, 1-Isocyanato-3,3,5-trimethyl-5-isocyanatomethylcyclohexan (Isophorondiisocyanat), 2,4- und 2,6 Hexahydro-toluylendiisocyanat sowie beliebige Gemische dieser Isomeren, 4,4'-, 2,4'- und 2,2'-Dicyclohexylmethandiisocyanat sowie beliebige Gemische dieser Isomeren, und vorzugsweise aromatische Di- und Polyisocyanate, wie beispielsweise 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,4'- Diphenyl-methandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Vorzugsweise weist die Polyisocyanatkomponente ein zahlenmittleres Molekulargewicht von 60 bis 50.000 g/mol, insbesondere von 400 bis 10.000 g/mol, bevorzugt von 400 bis 6.000 g/mol, auf.

Häufig werden auch sogenannte modifizierte mehrwertige Isocyanate, d. h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im Einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf ihr Gesamtgewicht. Beispiele sind mit niedermolekularen Diolen, Triolen, Dialkylenglycolen, Trialkylenglycolen oder Polyoxyalkylenglycolen mit zahlenmittleren Molekulargewichten bis 6.000 g/mol, insbesondere bis 1.500 g/mol, modifiziertes Roh-MDI oder 2,4- bzw. 2,6-Toluylen-diisocyanat. Beispiele für geeignete Di- bzw. Polyoxyalkylenglycole sind Diethylen-, Dipropylen-, Polyoxyethylen-, Polyoxypropylen und Polyoxypropylen-polyoxyethylenglycole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus Polyester- und/oder vorzugsweise Polyetherpolyolen und 4,4'-Diphenylmethandiisocyanat, Mischungen aus 2,4'- und 4,4'-Diphenylmethan-diisocyanat, 2,4- und/oder 2,6-Toluylendiisocyanat oder Roh-MDI. Bewährt haben sich ferner flüssige, Carbodiimidgruppen und/oder Isocyanuratringe enthaltende Polyisocyanate mit NCO-Gehalten von 33,6 bis 15 Gew.-%, vorzugsweise 31 bis 21 Gew.-%, bezogen auf das Gesamtgewicht, beispielsweise auf Basis von 4,4'-, 2,4'- und/oder 2,2'-Diphenylmethandiisocyanat und/oder 2,4- und/oder 2,6-Toluylen-diisocyanat.

Die modifizierten Polyisocyanate können miteinander oder mit unmodifizierten organischen Polyisocyanaten wie beispielsweise 2,4'-, 4,4'-Diphenylmethandiisocyanat, Roh-MDI, 2,4- und/oder 2,6-Toluylen-diisocyanat gemischt werden.

Besonders bewährt als Isocyanate haben sich Diphenylmethan-diisocyanat-Isomerengemische oder Roh-MDI und insbesondere Roh-MDI mit einem Diphenylmethandiisocyanat-Isomerengehalt von 30 bis 55 Gew.-% sowie urethangruppenhaltige Polyisocyanatgemische auf Basis von Diphenylmethan-diisocyanat mit einem NCO-Gehalt von 15 bis 33 Gew.-%.

Bevorzugte Gewichtsanteile der Polyisocyanatkomponente betragen von 10 bis 40 Gew.-%, insbesondere 13 bis 35 Gew.-% und besonders bevorzugt 15 bis 30 Gew.-%.

Erfindungsgemäß sind als Polyolkomponente nicht nur Polymere mit mindestens zwei Hydroxygruppen gemeint, sondern allgemein Verbindungen mit mindestens zwei gegenüber Isocyanaten aktiven Wasserstoffatomen.

Vorzugsweise ist die Polyolkomponente ein Diol, ein Polyetherdiol, ein Polyesterdiol, ein Polycarbonatdiol, ein Polycaprolactonpolyol oder ein Polyacrylatpolyol, wobei Polyetherdiol, Polyesterdiol und Polycarbonatdiol besonders bevorzugt sind, insbesondere Glycol, Propandiol, Butandiol, Pentandiol, Hexandiol, Cylohexandiol, Cyclohexyldimethanol, Oktandiol, Neopentylglycol, Diethylenglycol, Triethylenglycol, Trimethylpentandiol, Benzoldimethanol, Benzoldiol, Methylbenzoldiol, Bisphenol-A, Poly(butandiol-Co-Adipat)-glycol, Poly(hexandiol-Co-Adipat)-glycol, Poly(ethandiol-Co-Adipat)-glycol, Polytetramethylenglycol, Polypropylenglycol, Polyethylenglycol, oder eine Mischung daraus.

Die Hauptfunktion der Polyolkomponente besteht darin, mit der Polyisocyanatkomponente zu dem Polyurethanpolymer zu reagieren. Zusätzlich dient die Polyolkomponente jedoch auch als physikalischer Konditionierer, da die Elastizität des Polyurethans von dem Molekulargewicht der Polyolkomponente abhängig ist. Allgemein gilt, dass das resultierende Polyurethan umso weicher ist, je höher das Molekulargewicht der Polyolkomponente ist.

Vorzugsweise weist die Polyolkomponente ein zahlenmittleres Molekulargewicht von 60 bis 50.000 g/mol,

insbesondere von 400 bis 10.000 g/mol, bevorzugt von 400 bis 6.000 g/mol, auf.

Als Polyurethan-Dispersionen im Sinne der vorliegenden Erfindung können insbesondere die folgenden Dispersionen, optional in Kombination, zum Einsatz kommen:

a) anionisch stabilisierte aliphatische Polyester-Polyurethan-Dispersionen (Dispersionen auf Basis von Polyester und aliphatischem anionischem Isocyanat-Polyurethan). Hierzu gehören die folgenden Produkte, die von der Covestro AG vertrieben werden: Impranil® LP RSC 1380, DL 1537 XP, DL 1554 XP, von der Firma Lanxess Witcobond 373-04 oder der Firma Stahl PERMUTEX® RU-92-410

b) anionisch stabilisierte aliphatische Polyether-Polyurethan-Dispersionen. Zu diesen zählen die folgenden Produkte, die von der Covestro AG vertrieben werden: Impranil® 25 LP DSB 1069 oder von der Firma Lanxess Witcobond 386-53

c) anionisch stabilisierte aliphatische Polycarbonat-Polyester-Polyurethan-Dispersionen. Zu diesen zählen die folgenden Produkte, die von der Covestro AG vertrieben werden: Impranil® DLU oder von der Firma Stahl Permutex® EX-RU-92-600

d) anionisch stabilisierte Polycarbonat-Polyurethan-Dispersionen. Zu diesen zählen die folgenden Produkte, die von der Covestro AG vertrieben werden: Impranil® DL 2288 XP.

Hierbei handelt es sich um Polyurethan-Dispersionen mit einem hohen Feststoffanteil von vorzugsweise 30 bis 70 Gew.-%, besonders bevorzugt 50 bis 60 Gew.-%. Alle vorstehend unter a) bis d) genannten Produkte sind typischerweise frei von organischen Co-Lösungsmitteln.

Die Polyurethan-Dispersionen der vorliegenden Erfindung sind wässrig. Vorzugsweise sind sie frei von organischen Lösungsmitteln, sie können aber optional organische Lösungsmittel enthalten.

Zur Einstellung der Eigenschaften des herzustellenden Polyurethanträgers kann es vorteilhaft sein, dass das Ausgangsgemisch des Weiteren mindestens eine weitere Dispersion, typischerweise ausgewählt aus der Gruppe bestehend aus Polyurethan-Dispersionen, Polyurethan-Dispersionen, deren Polyolkomponente ein Comonomer mit Flammschutzwirkung aufweisen, Synthesekautschuk-Dispersionen, Naturkautschuk-Dispersionen und Polyacrylat-Dispersionen, enthält. Hierüber lassen sich u.a. die Stabilität des Polyurethanträgers und dessen Bruchdehnung einstellen.

Polyacrylat-Dispersionen enthalten wasserunlösliches Polyacrylat, das typischerweise mittels eines Emulgators in Wasser dispergiert ist. Sie enthalten beispielsweise etwa 30 bis 60 Gew.-% Polyacrylat und etwa 3 Gew.-% Emulgator. Beim Polyacrylat handelt es sich erfindungsgemäß um ein wasserunlösliches Polyacrylat, Polymethacrylat, Mischungen daraus oder Copolymeren mit anderen Monomeren. Beim Emulgator kann es sich um einen ionischen, nicht-ionischen oder sterischen Emulgator handeln. Dieser ist normalerweise nicht fest in die Polymerketten eingebaut. Acrylat-Dispersionen können weitere Additive, wie Filmbildner oder Co-Lösemittel, Entschäumer, Flammschutzmittel und/oder Benetzungsmittel enthalten.

Acrylatdispersionen werden typischerweise durch die Emulsionspolymerisation geeigneter Monomere erhalten. Hierzu werden diese mittels eines Emulgators fein in Wasser verteilt. Zur Emulsion der Monomere in Wasser wird ein wasserlöslicher Radikalinitiator gegeben. Da sich die aus diesem gebildeten Radikale bevorzugt im Wasser lösen, ist deren Konzentration in den Monomertröpfchen gering, so dass die Polymerisation dort sehr gleichmäßig ablaufen kann. Nach Beendigung der Polymerisation kann die Dispersion direkt verwendet werden, oft wird sie aber mit Additiven wie Entschäumern, Filmbildnern und/oder Benetzungsmitteln versetzt, um die Eigenschaften noch weiter zu verbessern.

Optional kann die Reaktion der OH-Gruppen der Polyolkomponente mit den Isocyanatgruppen katalysiert werden. Als Katalysator kommen insbesondere in Betracht:
Organische Metallverbindungen, vorzugsweise organische Zinnverbindungen, wie Zinn(II)salze von organischen Carbonsäuren, beispielsweise Zinn(II)acetat, Zinn(II)octoat, Zinn(II)ethylhexanoat, Zinn(II)laurat und die Dialkylzinn(IV)salze von organischen Carbonsäuren, beispielsweise Dibutylzinndiacetat, Dibutylzinndilaurat, Dibutylzinnmaleat, Dioctylzinndiacetat sowie tertiäre Amine wie Triethylamin, Tributylamin, Dimethylcyclohexylamin, Di-methylbenzylamin, N-Methylimidazol, N-Methyl-, N-Ethyl-, N-Cyclohexylmorpholin, N,N,N',N'-Tetramethylethylendiamin, N,N,N',N'-Tetramethylbutylendiamin, N,N,N',N'-Tetramethylhexylen-1,6-diamin, Pentamethyldiethylentriamin, Tetramethyldiaminoethylether, Bis- (dimethylaminopropyl)harnstoff, Dimethylpiperazin, 1,2-Dimethylimidazol, 1-Azabicyclo-[3.3.0]-octan, 1,4-Diazabicyclo-[2.2.2]-octan, außerdem Alkanolaminverbindungen wie Triethanolamin, Tris-isopropanolamin, N-Methyl- und N-Ethyldiethanolamin und Dimethylethanolamin.

Als Katalysatoren kommen weiter in Betracht: Tris-(dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxy-propyl)formiat, N,N,N-Trimethyl-N-(2-hydroxypropyl)-2-ethylhexanoat, Tetraalkylammoniumhydroxide wie Tetramethylammonium-hydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Vorzugsweise werden tertiäre Amine, Zinnverbindungen, Alkali- und Erdalkalicarboxylate, quarternäre Ammoniumsalze, s-Hexahydrotriazine und Tris-(dialkylaminomethyl)phenole eingesetzt.

Es werden vorzugsweise 0,001 bis 5 Gew. -%, insbesondere 0,002 bis 2 Gew.-% Katalysator bzw. Katalysatorkombination, bezogen auf das Gesamtgewicht des Ausgangsgemisches, verwendet.

Das Polyurethan kann optional eine aktiven Wasserstoff enthaltende Komponente umfassen, die eine hydrophile Gruppe bilden kann, und zwar vorzugsweise von 1 bis 15 Gew.-%, insbesondere von 3 bis 10 Gew.-% und besonders bevorzugt von 4 bis 7 Gew.-%. "Aktiver Wasserstoff" bedeutet dabei, dass das Wasserstoffatom der Komponente in der Weise instabil ist, dass es leicht mit anderen Verbindungen eine chemische Reaktion, z.B. eine Substitutionsreaktion, eingehen kann, so dass sich eine hydrophile Gruppe bilden kann. Diese Komponente bewirkt, dass das Polyurethan effizient in Wasser dispergiert werden kann. Als hydrophile Gruppe kommen insbesondere in Frage: $-COO^-$, $-SO_3^-$, $-NR_3^+$, oder - $(CH_2CH_2O)_n$-. Die eine aktiven Wasserstoff enthaltende Komponente kann beispielsweise sein: Dimethylolpropionsäure (DMPA), Dimethylolbuttersäure (DMBA), Polyethylenoxid, Bis(hydroxylethyl)amine oder Natrium-3-bis(hydroxyethyl)aminopropansulfonat.

Die eine aktiven Wasserstoff enthaltende Komponente ist, wie vorstehend beschrieben, optional. Zum Zwecke der Dispergierung enthält die Polyurethan-Dispersion alternativ oder zusätzlich häufig mindestens ein Tensid.

Als besonders geeignete Tenside, die auch als Schaumstabilisator wirken, seien insbesondere Stokal® STA (Ammoniumstearat) und Stokal® SR (Succinamat) der Bozzetto Group genannt.

Es kommen jedoch auch weitere Tenside in Betracht, die insbesondere ausgewählt sein können aus der Gruppe, bestehend aus Ethersulfaten, Fettalkoholsulfaten, Sarcosinaten, organischen Aminoxiden, Sulfonaten, Betainen, Amiden organischer Säuren, Sulfosuccinaten, Sulfonsäuren, Alkanolamiden, ethoxylierten Fettalkoholen, Sorbinaten und deren Kombinationen.

Als weitere optionale Komponente kann das Ausgangsgemisch ein Verdickungsmittel enthalten. Hier kann z.B. Borchi® Gel 0625 verwendet werden. Weiterhin sind als Verdickungsmittel Polyetherurethanlösungen wie beispielsweise Ortegol PV301 der Evonik Industries geeignet. Ein Verdickungsmittel stellt insbesondere Stabilität beim Trocknen sicher.

Das Ausgangsgemisch kann weitere Additive wie Stabilisatoren oder Lichtschutzmittel enthalten. Auch Lösungsmittel können als weitere Additive zugesetzt werden. Geeignet sind zur Herstellung von Polyurethanwerkstoffen gebräuchliche Lösungsmittel wie Ketone, z.B. Aceton, Carbonsäurealkylester wie Essigsäuremethylester, Alkylcarbonate, oder Amide, wie DMF oder zusätzliche flüssige Flammschutzmittel wie Alkylphosphate wie beispielsweise Triethylphosphat oder Tributylphosphat, halogenierte Alkylphosphate wie beispielsweise Tris-(2-chlorpropyl)phosphat oder Tris-(1,3-dichlorpropyl)phosphat, Arylphosphate wie beispielsweise Diphenylkresylphosphat, Phosphonate wie beispielsweise Diethylethanphosphonat. Einsetzbar sind ebenfalls Gemische aus den genannten Lösungsmitteln.

Weitere optionale Additive sind Zellregler der an sich bekannten Art wie Paraffine oder Fettalkohole oder Dimethylpolysiloxane, Flammschutzmittel, Pigmente oder Farbstoffe, Stabilisatoren gegen Alterungs- und Witterungseinflüsse, Weichmacher, fungistatisch und bakteriostatisch wirkende Substanzen, Füllstoffe wie Bariumsulfat, Bentonit, Kaolin, Glaspulver, Glaskugeln, Glasfasern, Calciumcarbonat, Kieselgur, Quarzsand, Fluorpolymere, Thermoplasten, Mikrokugeln, expandierbarer Graphit, Ruß oder Schlämmkreide oder Kombinationen davon.

Ebenso können in einer bevorzugten Ausführungsform expandierbare Mikroballons zugegeben werden, die beim Trocknen der Trägermasse expandiert werden. Alternativ können vorexpandierte Mikroballons zugegeben werden. Geeignete Mikroballons sind im Folgenden beschrieben.

Die Schäumung bei dem erfindungsgemäßen Träger auf Basis von Polyurethan, das aus einer Dispersion hergestellt worden ist, kann mittels Frothing erzielt werden. Das Verfahren umfasst typischerweise die folgenden Schritte:

a) Vorlegen einer wie vorstehend beschriebenen Polyurethan-Dispersion und mindestens eines Tensids sowie optional weiterer Komponenten, wie insbesondere weiterer Dispersionen, unter Bildung eines Ausgangsgemisches,

b) mechanisches Schäumen des Ausgangsgemisches unter Bildung einer feuchten Polyurethanschaummasse, optional unter Zugabe weiterer Komponenten, wie insbesondere Füllstoffe und/oder weiterer Additive,

c) Auftragen der feuchten Polyurethanschaummasse auf eine Oberfläche, vorzugsweise eines temporären Trägers, wie insbesondere eines Liners, oder einer Haftklebemasseschicht,

d) Trocken der feuchten Polyurethanschaummasse unter Erhalt des Polyurethanschaums.

Zur Bildung des Polyurethanschaums wird die Ausgangsmischung, also die wie vorstehend oder auf andere Weise hergestellte Polyurethan-Dispersion zusammen mit dem mindestens einen Tensid, sowie optional einem Lösungsmittel und/oder den weiteren optionalen Bestandteilen mechanisch aufgeschlagen und geschäumt. Optional kann nach dem Aufschlagen ein Verdickungsmittel zugegeben werden.

Alternativ kann eine Präpolymer-Dispersion zum Einsatz kommen, und das Präpolymer polymerisiert beim mechanischen Aufschlagen/Schäumen zum Polyurethan.

Es ist möglich, zusätzlich oder alternativ ein physikalisches Treibmittel zuzugeben. So kann die Ausgangsmischung beispielsweise in Anwesenheit eines Gases wie Luft, Stickstoff oder eines Edelgases wie zum Beispiele Helium, Neon, oder Argon geschäumt werden. Treibmittel können einzeln oder als Mischung verschiedener Treibmittel zum Einsatz kommen. Treibmittel können aus einer großen Anzahl Materialien ausgewählt werden, die folgendes umfasst: Kohlenwasserstoffe, Ether und Esters und Ähnliches. Typische physikalische Treibmittel weisen einen Siedepunkt im Bereich von -50° C bis +100 °C, und vorzugsweise von -50 °C bis +50 °C auf. Bevorzugte physikalische Treibmittel umfassen Kohlenwasserstoffe wie n-Pentan, Isopentan, und Cyclopentan, Methylenchlorid, oder beliebige Kombinationen der vorstehend genannten Verbindungen. Solche Treibmittel können bevorzugt in Mengen von 5 Gew.-% bis 50 Gew.-% des Reaktionsgemisches, insbesondere von 10 Gew.-% bis 30 Gew.-% des Reaktionsgemisches eingesetzt werden.

Ebenso ist es möglich, zusätzlich oder alternativ ein chemisches Treibmittel zuzugeben. Chemische Treibmittel sind Substanzen, die erst während des Verarbeitungsprozesses aufgrund einer chemischen Reaktion - meist eingeleitet durch Wärmezufuhr - Gas abspalten und dadurch die Erzeugung einer Schaumstruktur im Polymer ermöglichen. Ursache für die Gasabspaltung kann entweder die thermische Zersetzung des Treibmittels oder eine chemische Reaktion verschiedener im Treibmittel enthaltener Substanzen sein. Das entstehende Gas ist zumeist $N_2$, $CO_2$ oder CO.

Geschäumte Träger aus Basis von Polyurethan weisen vorzugsweise eine Dichte von 250 kg/m$^3$ bis 500 kg/m$^3$, besonders bevorzugt 350 bis 450 kg/m$^3$ auf.

Optional kann über die Schaumschicht eine Folie aufgebracht werden. Die Folie kann, wenn sie gespannt ist, die Dicke der Schaumschicht begrenzen. Die Folie kann aber auch nur als Abdeckung fungieren.

In einer weiteren bevorzugten Ausführungsform kann der Schaum mittels einer Klinge oder eines Messers auf den temporären Träger, wie insbesondere Liner, bzw. die Haftklebemasseschicht aufgebracht werden, wodurch eine gleichmäßige Dicke der Schaumschicht erreicht wird, bevor diese in den Trockenofen gebracht bzw. gefahren wird. Alternativ können auch Walzen vorgesehen sein, um die Dicke der Schaumschicht einzustellen.

Nach Aufbringen der Schaumschicht auf den Träger erfolgt die Trocknung, vorzugsweise in einem Trockenofen. Bevorzugte Temperaturen zum Trocknen betragen von 50°C bis 180°C, vorzugsweise von 50 °C bis 120 °C, insbesondere von 70°C bis 115°C, ganz besonders bevorzugt von 100°C bis 115°C. Vorzugsweise beträgt die Temperatur mindestens 50°C, insbesondere mindestens 60°C, bevorzugt mindestens 70°C, insbesondere mindestens 80°C, ganz besonders bevorzugt mindestens 90°C, insbesondere mindestens 100°C, insbesondere mindestens 110°C, sehr bevorzugt mindestens 120°C, insbesondere mindestens 130°C. Weiterhin beträgt die Temperatur vorzugsweise höchstens 180°C, insbesondere höchstens 170°C, besonders bevorzugt höchstens 160°C, insbesondere höchstens 150°C.

Vorzugsweise erfolgt das Trocknen in Schritt d) der oben angegebenen Verfahrensfolge in mindestens zwei Stufen, wobei die Temperatur der Trocknung von einem Schritt zum nächsten erhöht wird. Anders als bei Verwendung von hohen Ausgangstemperaturen (z.B. 120°C) beim Trocknen ermöglicht eine gestufte Erhöhung der Trocknungstemperatur ein gleichmäßiges Trocknen, was zu einer gleichmäßigen Verteilung der Zellgrößen führt. Bei geringerer Temperatur erfolgt zunächst eine relativ gleichmäßige Vortrocknung des gesamten Schaums und im weiteren Schritt bei höherer Temperatur die Entfernung der Restfeuchte.

Es kann jedoch auch wünschenswert sein, eine über den Querschnitt variierende Zellgröße zu erreichen. In diesem Fall sollte gleich mit einer hohen Trocknungstemperatur gearbeitet werden. Das sorgt dafür, dass der Schaum an der Oberfläche schnell trocknet, im Inneren hingegen lange Zeit feucht bleibt, wodurch sich die über den Querschnitt unterschiedliche Zellgrößenverteilung ergibt.

Besonders bevorzugt erfolgt das Trocknen in Schritt d) in zwei Stufen, wobei die Temperatur der Trocknung im 1. Schritt von 50°C bis 100°C, vorzugsweise 70°C bis 90°C, insbesondere 80°C, und die Temperatur der Trocknung im 2. Schritt von 105°C bis 180°C, vorzugsweise 110°C bis 150°C, insbesondere 120°C, beträgt.

Vorzugsweise ist die PU-basierte Trägerschicht aus Dispersion frei von Additiven wie Antiblockmittel und Wachsen. Ebenso vorzugsweise weist das Polyurethan aus den oben beschriebenen Gründen keine kristalline Überstruktur auf.

Die PU-basierte Trägerschicht aus Dispersion oder das Klebeband, das diese Schicht enthält, kann zudem vorzugsweise einer Temperierung bei mindestens 150 °C unterzogen worden, um die Zugfestigkeit zu optimieren.

iii) Mikroballons

Die im Rahmen der vorliegenden Erfindung eingesetzten Träger können unter Verwendung von Mikroballons geschäumt sein.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylat Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere

Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe, vorzugsweise 6 bis 45 $\mu$m Durchmesser im unexpandierten Zustand, und ihre zur Expansion benötigten Starttemperaturen, vorzugsweise 75 bis 220 °C, differenzieren.

Ein Beispiel für kommerziell erhältliche Mikroballons sind die Expancel® DU-Typen (DU = dry unexpanded) von der Firma Nouryon.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasse geeignet.

Eine geschäumte erfindungsgemäße Haftklebemasse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel xxx DE (Dry Expanded) von der Firma Nouryon kommerziell erhältlich.

Erfindungsgemäß beträgt der mittlere Durchmesser der von den Mikroballons gebildeten Hohlräume in den geschäumten Haftklebemasseschichten vorzugsweise 10 bis 200 $\mu$m, stärker bevorzugt von 15 bis 200 $\mu$m. Da hierbei die Durchmesser der von den Mikroballons gebildeten Hohlräume in den geschäumten Haftklebemasseschichten vermessen werden, handelt es sich bei den Durchmessern um jene Durchmesser der von den expandierten Mikroballons gebildeten Hohlräume. Mit dem mittleren Durchmesser ist dabei das arithmetische Mittel der Durchmesser der von den Mikroballons gebildeten Hohlräume in der Haftklebemasseschicht gemeint. Die Bestimmung des mittleren Durchmessers der von den Mikroballons gebildeten Hohlräume in einer Haftklebemasseschicht erfolgt anhand von 5 verschiedenen Kryobruchkanten des Klebebands im Rasterelektronenmikroskop (REM) bei 500-facher Vergrößerung. Die Durchmesser der auf den Aufnahmen zu sehenden Mikroballons werden graphisch derart ermittelt, dass aus den REM-Aufnahmen für jeden einzelnen Mikroballon der zu untersuchenden Haftklebemasseschicht dessen maximale Ausdehnung in beliebiger (zweidimensionaler) Richtung entnommen wird und als dessen Durchmesser angesehen wird.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Klebemasse liegt gemäß einer bevorzugten Ausführungsform der Erfindung zwischen größer 0 Gew. % und 10 Gew.-%, insbesondere zwischen 0,25 Gew.-% und 5 Gew.-%, ganz insbesondere zwischen 0,5 und 1,5 Gew.-% jeweils bezogen auf die Gesamtzusammensetzung der Klebemasse. Die Angabe bezieht sich auf unexpandierte Mikroballons.

Eine erfindungsgemäße, expandierbare Mikrohohlkugeln enthaltende Polymermasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons").

b) Vernetzer

Erfindungsgemäß wird ein mit einem Vernetzer vernetztes Polyurethan als Basis für den Träger verwendet. Nach herrschender Meinung erhöht sich das Zugfestigkeitsniveau bei gleichzeitiger Verringerung des maximalen Dehnvermögens eines polyurethanbasierten Trägers durch die Zugabe eines Vernetzers. Ein zerstörungsfreies Ablösen des Klebebandes wäre dadurch nicht gewährbar. Im Rahmen der vorliegenden Erfindung hat sich überraschend gezeigt, dass sich, entgegen der herrschenden Meinung, nur die Bruchkraft erhöht bei nahezu gleichbleibendem maximalen Dehnvermögen, was sich vorteilhaft auf die Wiederablösbarkeit des erfindungsgemäßen Klebebandes auswirkt.

Vernetzer können im Wesentlichen auf zwei unterschiedliche Weisen reagieren: durch die Reaktion mit einem Polymer oder durch die Reaktion mit sich selbst unter Bildung eines sogenannten interpenetrierenden Netzwerkes, was ein weitaus dichteres Netzwerk erzeugt und somit viele Eigenschaften, wie z.B. Festigkeit, Abriebfestigkeit, Hydrolyse- und Chemikalienbeständigkeit verbessert.

Als Vernetzer im Rahmen der vorliegenden Erfindung sind insbesondere Vernetzer auf Basis von Aziridin,

Carbodiimid (Polycarbodiimid), Melamin, radikalbildenden Substanzen, wie organische Peroxide, Schwefel und Isocyanat bevorzugt. In einer bevorzugten Ausführungsform handelt es sich bei dem Vernetzer um ein Isocyanat, vorzugsweise um ein blockiertes Polyisocyanat, insbesondere um ein blockiertes aliphatisches Polyisocyanat.

Polyisocyanate können mit funktionellen Gruppen wie Amino- oder Hydroxyl-Gruppen reagieren. Durch die Polyfunktionalität dieser Vernetzerart entsteht ein 3D vernetztes Netzwerk. Polyisocyanate reagieren auch mit Wasser, was wiederum eine Reaktion der Polyisocyanat-Moleküle mit sich selbst hervorruft und in einem Netzwerk resultiert, das aus einer Kombination aus klassischem 3D polymer-vernetzten Netzwerk und einem interpenetrierenden Netzwerk, hervorgerufen durch die Reaktivität mehrerer Polyisocyanat Moleküle mit sich selbst, besteht.

Im Falle eines Isocyanat-Vernetzers wird dieser vorzugsweise aus einer Dispersion gewonnen, die ein Polyisocyanat, ein Blockierungsmittel für Isocyanatgruppen und Wasser umfasst. In einer bevorzugten Ausführungsform umfasst die Dispersion zur Gewinnung des Vernetzers weiterhin ein Polyamin, vorzugsweise eines mit wenigstens einer Carboxyl- und/oder Carboxylatgruppe.

Als Polyisocyanate werden vorliegend Verbindungen angesehen, die NCO-Gruppen aufweisen. Das Polyisocyanat kann ein zahlenmittleres Molekulargewicht von 140 bis 1500 g/mol und vorzugsweise von 168 bis 700 g/mol aufweisen. Gemäß einer bevorzugten Ausführungsform der Erfindung ist vorgesehen, dass das Polyisocyanat eine Isocyanatfunktionalität von > 2 und < 6, bevorzugt von > 3 und < 5 und besonders bevorzugt von > 3 und < 4 aufweist.

Das Polyisocyanat hat vorzugsweise einen NCO-Gruppen Gehalt von 15 bis 30 Gew.-%, bevorzugt von 18 bis 25 Gew.-% und besonders bevorzugt von 20 bis 24 Gew.-%, bezogen auf das zahlenmittlere Molgewicht des Polyisocyanats.

Geeignete Polyisocyanate sind z.B. Hexamethylendiisocyanat (HDI), Isophorondiisocyanat (IPDI), 4,4'-Diisocyanatodicyclohexylmethan ($Hi_2MDI$), 1,4-Butandiisocyanat, Hexahydrodiisocyanatotoluol, 1,3-Bishydroxymethylcyclohexan, Hexahydrodiisocyanatoxylol, Nonantriisocyanat. Besonders bevorzugt ist die Verwendung von Isophorondiisocyanat, Hexamethylendiisocyanat und/oder 4,4-Diisocyanatodicyclohexylmethan.

Als besonders bevorzugte Polyisocyanate werden aliphatische Polyisocyanate, bevorzugt Hexamethylendiisocyanat und besonders bevorzugt Trimere von Hexamethylendiisocyanat verwendet. Vorteilhaft ist auch, wenn wässrige blockierte Polyurethanharnstoffdispersion ausschließlich anionisch hydrophiliert ist. Dies bedeutet, dass die Polyurethanharnstoffdispersion nicht kationisch und / oder nicht-ionisch hydrophiliert, d.h. keine entsprechenden Gruppen aufweist.

Unter einem Blockierungsmittel werden vorliegend Verbindungen verstanden, die mit einer Isocyanatgruppe reagieren und unter definierten Bedingungen wieder von dieser abgespalten werden können, beispielsweise thermisch. Dieser Vorgang wird als Deblockierung bezeichnet. Als besonders vorteilhaft hat sich im Rahmen der vorliegenden Erfindung eine niedrige Deblockierungstemperatur erwiesen. Daher ist eine Ausführungsform bevorzugt, in der die Deblockierungstemperatur weniger als 130 °C beträgt.

Als geeignete Vernetzer auf Isocyanat-Basis haben sich beispielsweise solche erwiesen, die unter dem Handelsnamen Imprafix 2794 von Covestro, Deutschland, erhältlich sind.

Polycarbodiimide reagieren selektiv mit Carbonsäure-Gruppen in Polymerketten. Diese Art der Vernetzung erzeugt ein klassisches 3D polymer-vernetztes Netzwerk. Im Vergleich zu Polyisocyanaten sind Polycarbodiime wasserunempfindlicher und erreichen somit längere Topfzeiten.

Melaminharze sind aufgrund ihrer hohen Reaktivität sehr effektive Vernetzer. Sie erfordern geringere Zugabemengen als Isocyanate oder Carbodiime. Melaminharze werden unter Bildung sehr harter Netzwerke oft in Verbindung mit Hydroxl-funktionellen Polymerharzen verwendet, können aber auch mit Säuregruppen reagieren. Melaminharze benötigen recht hohe Vernetzungstemperaturen, welche durch den Zusatz von Katalysatoren reduziert werden können.

Polyaziridine sind mitunter die reaktivsten Vernetzer und somit hocheffizient. Polyaziridine reagieren selektiv mit Carbonsäuregruppen in Polymerketten. Diese Vernetzungsart erzeugt klassische 3D polymer-vernetzte Netzwerke. Aufgrund des geringeren Molekulargewichts wird im Vergleich zu Polyisocyanaten und Polycarbodiimiden ein wesentlich geringerer Anteil benötigt.

Durch die peroxidische Vernetzung wird ein hoher Vernetzungsgrad bei einer günstigen Verarbeitungssicherheit und breiten Anwendbarkeit erreicht. Jedoch sind die Vulkanisationszeiten sehr lang.

Für die Vernetzung mit Schwefel ist zumeist der Zusatz von Vulkanisationsbeschleunigern notwendig, um bei den zur Vernetzung angewandten Temperaturen Abbauerscheinungen zu verhindern. Die Elastizität und Kältefestigkeit der Vulkanisate sind zumeist niedriger.

c) Haftklebemasse

Damit sich Klebebänder durch Dehnung in der Verklebungsebene rückstands- und zerstörungsfrei wieder ablösen lassen, müssen sie bestimmte klebtechnische Eigenschaften besitzen. So muss bei Dehnung die Klebrigkeit der Klebebänder deutlich sinken. Je niedriger die Klebleistung im gedehnten Zustand ist, umso weniger stark wird der Untergrund beim Ablösen beschädigt oder umso weniger ausgeprägt ist die Gefahr, dass Rückstände auf dem Verklebungssubstrat zurückbleiben. In dieser Beziehung haben sich insbesondere Haftklebemassen auf Basis von Vinylaromatenblockcopolymeren, insbesondere Styrolblockcopolymeren als vorteilhaft erwiesen, wie sie erfindungsgemäß eingesetzt werden.

Bevorzugt ist als Vinylaromatenblockcopolymer mindestens ein Synthesekautschuk in Form eines Blockcopolymers mit einem Aufbau A-B, A-B-A, $(A-B)_n$, $(A-B)_nX$ oder $(A-B-A)_nX$, worin

- die Blöcke A unabhängig voneinander für ein Polymer, gebildet durch Polymerisation von Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl $\geq 2$ stehen.

Insbesondere sind alle Synthesekautschuke der erfindungsgemäßen Haftklebemasse Blockcopolymere mit einem Aufbau wie vorstehend dargelegt. Die erfindungsgemäße Haftklebemasse kann somit auch Gemische verschiedener Blockcopolymere mit einem Aufbau wie vorstehend enthalten.

Geeignete Blockcopolymere umfassen einen oder mehrere gummiartige Blöcke B (Weichblöcke) und einen oder mehrere glasartige Blöcke A (Hartblöcke). Besonders bevorzugt ist mindestens ein Synthesekautschuk der erfindungsgemäßen Haftklebemasse ein Blockcopolymer mit einem Aufbau A-B, A-B-A, $(A-B)_3X$ oder $(A-B)_4X$, wobei für A, B und X die vorstehenden Bedeutungen gelten, und wobei mindestens ein Blockcopolymer mindestens zwei Hartblöcke enthält. Ganz besonders bevorzugt sind alle Synthesekautschuke der erfindungsgemäßen Haftklebemasse Blockcopolymere mit einem Aufbau A-B, A-B-A, $(A-B)_3X$ oder $(A-B)_4X$, wobei für A, B und X die vorstehenden Bedeutungen gelten. Insbesondere ist der Synthesekautschuk der erfindungsgemäßen Haftklebemasse ein Gemisch aus Blockcopolymeren mit einem Aufbau A-B, A-B-A, $(A-B)_3X$ oder $(A-B)_4X$, das bevorzugt mindestens Diblockcopolymere A-B und/oder Triblockcopolymere A-B-A enthält.

Weiterhin vorteilhaft ist ein Gemisch aus Diblock- und Triblockcopolymeren und $(A-B)_n$ oder $(A-B)_nX$-Blockcopolymeren mit n größer gleich 3.

Die aus den A- und B-Blöcken resultierenden Blockcopolymere können gleiche oder unterschiedliche B-Blöcke enthalten. Die Blockcopolymere können lineare A-B-A-Strukturen aufweisen. Einsetzbar sind ebenfalls Blockcopolymere von radialer Gestalt sowie sternförmige und lineare Multiblockcopolymere. Als weitere Komponenten können A-B-Zweiblockcopolymere vorhanden sein. Die vorgenannten Polymere können allein oder im Gemisch miteinander genutzt werden, wobei A-B-Zweiblockcopolymere nicht allein einsetzbar sind.

Der Block A ist insbesondere ein glasartiger Block mit einer bevorzugten Glasübergangstemperatur (Tg, DSC), die oberhalb der Raumtemperatur liegt. Besonders bevorzugt liegt die Tg des glasartigen Blockes bei mindestens 40 °C, insbesondere bei mindestens 60 °C, ganz besonders bevorzugt bei mindestens 80 °C und äußerst bevorzugt bei mindestens 100 °C. Der Anteil an Vinylaromatenblöcken A an der Gesamtheit der Blockcopolymere beträgt bevorzugt 10 bis 40 Gew.-%, besonders bevorzugt 20 bis 33 Gew.-%. Vinylaromaten zum Aufbau des Blocks A umfassen bevorzugt Styrol und $\alpha$-Methylstyrol. Der Block A kann somit als Homo- oder Copolymer vorliegen. Besonders bevorzugt ist der Block A ein Polystyrol.

Der Block B ist insbesondere ein gummiartiger Block bzw. Weichblock mit einer bevorzugten Tg von kleiner als Raumtemperatur. Die Tg des Weichblocks ist besonders bevorzugt kleiner als 0 °C, insbesondere kleiner als -10 °C, beispielsweise kleiner als -40 °C und ganz besonders bevorzugt kleiner als -60 °C.

Monomereinheiten zum Aufbau des Blocks A umfassen bevorzugt Styrol, $\alpha$-Methylstyrol und/oder andere Styrol-Derivate. Der Block A kann somit als Homo- oder Copolymer vorliegen. Besonders bevorzugt ist der Block A ein Polystyrol.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen. Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien, oder ein Polymer aus einem Gemisch aus Butadien und Isopren. Ganz besonders bevorzugt ist der Block B ein Polybutadien.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen, vorzugsweise für A-Blöcke mindestens 25 °C, insbesondere mindestens 50 °C und für B-Blöcke höchstens 25 °C, insbesondere höchstens -25 °C, wider.

In einer bevorzugten Ausgestaltung beträgt der Anteil Vinylaromatenblockcopolymere, in Summe bezogen auf die gesamte Haftklebemasse 15 bis 60 Gew.-%, besonders bevorzugt sind 20 bis 50 Gew.-%. Ein zu geringer Anteil an Vinylaromatenblockcopolymeren hat zur Folge, dass die Kohäsion der Haftklebemasse relativ niedrig ist, so dass die Reißfestigkeit, die zum Strippen erforderlich ist, zu gering ist. Ein zu hoher Anteil an Vinylaromatenblockcopolymer hat wiederum zur Folge, dass die Haftklebemasse kaum noch haftklebrig ist.

Erfindungsgemäße Haftklebemassen basieren auf Vinylaromatenblockcopolymeren, die vorzugsweise mit mit der Elastomerphase mischbaren Klebharzen versetzt werden. Die Haftklebemassen weisen neben dem mindestens einen Vinylaromatenblockcopolymer vorzugsweise mindestens ein Klebharz auf, um die Adhäsion in gewünschter Weise zu erhöhen. Das Klebharz sollte mit dem Elastomerblock der Blockcopolymere verträglich sein.

Unter einem "Klebharz" wird entsprechend dem allgemeinem Fachmannverständnis ein oligomeres oder polymeres Harz verstanden, das die Adhäsion (den Tack, die Eigenklebrigkeit) der Haftklebemasse im Vergleich zu der kein Klebharz enthaltenden, ansonsten aber identischen Haftklebemasse erhöht.

In einer bevorzugten Ausführungsform besteht die Klebemassenschicht aus einer Haftklebemasse, die auf Basis von Vinylaromatenblockcopolymer und Klebharzen aufgebaut ist, wobei vorzugsweise zu mindestens 30 Gew.-%, und vorzugsweise zu mindestens 50 Gew.-%, jeweils bezogen auf den Gesamtklebharzanteil, ein Klebharz gewählt wird mit einem DACP (diacetone alcohol cloud point) von größer -20 °C, bevorzugt größer 0 °C, und einer Erweichungstemperatur (Ring & Ball) von größer gleich 70 °C, vorzugsweise größer gleich 100 °C.

Besonders bevorzugt handelt es sich bei den Klebharzen zu mindestens 30 Gew.-%, wie insbesondere mindestens 50 Gew.-%, jeweils bezogen auf den Gesamtklebharzanteil, um Kohlenwasserstoffharze oder Terpenharze oder eine Mischung dergleichen.

Es wurde gefunden, dass als Klebharze für die Haftklebemasse(n) insbesondere unpolare Kohlenwasserstoffharze zum Beispiel hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5$/$C_9$- oder Cg-Monomerströmen, Polyterpenharze auf Basis von $\alpha$-Pinen und/oder ß-Pinen und/oder $\delta$-Limonen vorteilhaft eingesetzt werden können. Vorgenannte Klebharze können sowohl allein als auch im Gemisch eingesetzt werden. Dabei können sowohl bei Raumtemperatur feste als auch flüssige Harze zum Einsatz kommen. Klebharze, hydriert oder nicht hydriert, die auch Sauerstoff enthalten, können optional bevorzugt bis zu einem maximalen Anteil von 70 Gew.-% bezogen auf die Gesamtmasse der Harze in der Klebemasse eingesetzt werden.

Der Anteil der bei Raumtemperatur flüssigen Harze beträgt gemäß einer bevorzugten Variante bis zu 15 Gew.-%, vorzugsweise bis zu 10 Gew.-% bezogen auf die gesamte Haftklebemasse.

Die erfindungsgemäße Haftklebemasse enthält bevorzugt 20 bis 60 Gew.-%, bezogen auf das Gesamtgewicht der Haftklebemasse, mindestens ein Klebharz. Besonders bevorzugt sind zu 30 bis 50 Gew.-%, bezogen auf das Gesamtgewicht der Haftklebemasse, Klebharze enthalten.

Als weitere Additive können typischerweise genutzt werden:

- Plastifizierungsmittel wie zum Beispiel Weichmacheröle, oder niedermolekulare flüssige Polymere, wie zum Beispiel niedermolekulare Polybutene, vorzugsweise mit einem Anteil von 0,2 bis 5 Gew.-% bezogen auf das Gesamtgewicht der Haftklebemasse
- primäre Antioxidantien wie zum Beispiel sterisch gehinderte Phenole, vorzugsweise mit einem Anteil von 0,2 bis 1 Gew.-% bezogen auf das Gesamtgewicht der Haftklebemasse
- sekundäre Antioxidantien, wie zum Beispiel Phosphite oder Thioether, vorzugsweise mit einem Anteil von 0,2 bis 1 Gew.-% bezogen auf das Gesamtgewicht der Haftklebemasse
- Prozessstabilisatoren wie zum Beispiel C-Radikalfänger, vorzugsweise mit einem Anteil von 0,2 bis 1 Gew.-% bezogen auf das Gesamtgewicht der Haftklebemasse
- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Haftklebemasse
- Verarbeitungshilfsmittel, vorzugsweise mit einem Anteil von 0,2 bis 1 Gew.-% bezogen auf das Gesamtgewicht der Haftklebemasse
- Endblockverstärkerharze, vorzugsweise mit einem Anteil von 0,2 bis 10 Gew.-% bezogen auf das Gesamtgewicht der Haftklebemasse sowie
- gegebenenfalls weitere Polymere von bevorzugt elastomerer Natur; entsprechend nutzbare Elastomere beinhalten

unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 10 Gew.-% bezogen auf das Gesamtgewicht der Haftklebemasse.

Die Art und Menge der Abmischkomponenten kann bedarfsweise ausgewählt werden.

Erfindungsgemäß ist es auch, wenn die Klebemasse einige vorzugsweise alle der genannten Zuschlagstoffe jeweils nicht aufweist.

In einer Ausführungsform der vorliegenden Erfindung enthält die Haftklebemasse weitere Additive. Beispielhaft, aber nicht einschränkend erwähnt seien kristalline oder amorphe Oxide, Hydroxide, Carbonate, Nitride, Halogenide, Carbide oder gemischte Oxid-/Hydroxid-/Halogenidverbindungen des Aluminiums, Siliciums, Zirkoniums, Titans, Zinns, Zinks, Eisens oder der (Erd)alkalimetalle. Hierbei handelt es sich im Wesentlichen um Tonerden zum Beispiel Aluminiumoxide, Boehmit, Bayerit, Gibbsit, Diaspor und ähnliche. Ganz besonders geeignet sind Schichtsilicate wie beispielsweise Bentonit, Montmorillonit, Hydrotalcit, Hectorit, Kaolinit, Boehmit, Glimmer, Vermiculit oder deren Mischungen. Aber auch Ruße oder weitere Modifikationen des Kohlenstoffs, etwa Kohlenstoffnanoröhrchen, können verwendet werden.

Die Klebemassen können auch mit Farbstoffen oder Pigmenten eingefärbt sein. Die Klebemassen können neben transparent, weiß, schwarz oder farbig sein.

Als Weichmacher können zum Beispiel (Meth)Acrylat-Oligomere, Phthalate, Cyclohexandicarbonsäureester, wasserlösliche Weichmacher, Weichharze, Phosphate oder Polyphosphate zudosiert werden.

Die Beigabe von Kieselsäuren, vorteilhaft von gefällter, mit Dimethyldichlorsilan oberflächenmodifizierter Kieselsäure, kann genutzt werden, um die Wärmescherfestigkeit der Haftklebemasse einzustellen.

Die erfindungsgemäße Haftklebemasse ist in einer bevorzugten Ausführungsform geschäumt. Die Schäumung erfolgt typischerweise durch das Einbringen und nachfolgende Expandieren von Mikroballons, wie oben beschrieben.

Die absolute Dichte einer geschäumten erfindungsgemäßen Haftklebemasse beträgt vorzugsweise 220 bis 990 kg/$m^3$, bevorzugter 300 bis 970 kg/$m^3$, stärker bevorzugt 450 bis 900 kg/$m^3$, insbesondere 500 bis 850 kg/$m^3$. Die relative Dichte beschreibt das Verhältnis der Dichte der geschäumten erfindungsgemäßen Haftklebemasse zur Dichte der rezepturidentischen, ungeschäumten erfindungsgemäßen Haftklebemasse. Die relative Dichte einer erfindungsgemäßen Haftklebemasse beträgt vorzugsweise 0,20 bis 0,99, stärker bevorzugt 0,30 bis 0,97, insbesondere 0,45 bis 0,90, wie zum Beispiel 0,50 bis 0,85.

Gemäß einer bevorzugten Ausführungsform der Erfindung besteht die Klebemasse nur aus Vinylaromatenblockcopolymer, gegebenenfalls Klebharzen, Mikroballons und gegebenenfalls den oben erwähnten Additiven.

Weiter vorzugsweise besteht die Haftklebemasse aus folgender Zusammensetzung:

- Styrolblockcopolymer 20 bis 75 Gew.-%
- Klebharze 24,6 bis 60 Gew.-%
- Mikroballons 0,2 bis 10 Gew.-%
- Additive 0,2 bis 10 Gew.-%

Weiter vorzugsweise besteht die Haftklebemasse aus folgender Zusammensetzung:

- Styrolblockcopolymer 35 bis 65 Gew.-%
- Klebharze 34,6 bis 45 Gew.-%
- Mikroballons 0,2 bis 10 Gew.-%
- Additive 0,2 bis 10 Gew.-%

Als besonders geeignete Haftklebemassen haben sich in dieser Hinsicht Styrolblockcopolymere erwiesen, insbesondere Styrol-Butadien-Blockcopolymere. Daher ist eine Ausführungsform bevorzugt, in der es sich bei dem Styrolblockcopolymer, das die Basis für die Haftklebemasse bildet, um Styrol-Butadien-Blockcopolymer handelt.

Die Haftklebemasseschichten der erfindungsgemäßen Klebebänder basieren vorzugsweise auf Vinylaromatenblockcopolymeren oder einem Blend aus Vinylaromatenblockcopolymer und Polyacrylat, wobei das Vinylaromatenblockcopolymer vorzugsweise mit dem Polyacrylat im Wesentlichen nicht mischbar ist. Ein solcher Blend besteht vorzugsweise zu 50 bis 90 Gew.-%, bevorzugt 65 bis 80 Gew.-%, aus Polyacrylat und zu 10 bis 50 Gew.-%, bevorzugt 20 bis 35 Gew.-%, aus Vinylaromatenblockcopolymer-Klebmasse, wobei sich die beiden Gewichtsanteile zu 100 Gew.-% addieren.

Unter einer Haftklebemasse auf Basis eines Polymers oder einer Polymermischung, d.h. eines Polymerblends, ist im Rahmen der vorliegenden Anmeldung insbesondere zu verstehen, dass das Polymer bzw. die Polymermischung mindestens 50 Gew.-% aller Polymerkomponenten der Haftklebemasse darstellen, bevorzugt sind mindestens 90 Gew.-%. In einer besonders bevorzugten Ausführungsform stellt das Polymer bzw. die Polymermischung das einzige Polymer der Klebemasse dar. Eventuell in der Klebemasse enthaltene Klebharze gelten in diesem Zusammenhang nicht als Polymere.

Unter einem "Poly(meth)acrylat" wird ein Polymer verstanden, welches durch radikalische Polymerisation von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Bevorzugt enthält die erfindungsgemäße Haftklebemasse Poly(meth)acrylat zu insgesamt 35 bis 65 Gew.-%, stärker bevorzugt zu insgesamt 40 bis 60 Gew.-%, jeweils bezogen auf das Gesamtgewicht der Haftklebemasse. Es können ein (einziges) Poly(meth)acrylat oder mehrere Poly(meth)acrylate enthalten sein.

Die Glasübergangstemperatur des Poly(meth)acrylats der erfindungsgemäßen Haftklebemasse beträgt bevorzugt < 0 °C, stärker bevorzugt zwischen -20 und -50 °C.

Bevorzugt enthält das Poly(meth)acrylat der erfindungsgemäßen Haftklebmasse zumindest ein anteilig einpolymerisiertes funktionelles, besonders bevorzugt mit Epoxidgruppen unter Ausbildung einer kovalenten Bindung reaktives Monomer. Ganz besonders bevorzugt enthält das anteilig einpolymerisierte funktionelle, besonders bevorzugt mit Epoxidgruppen unter Ausbildung einer kovalenten Bindung reaktive Monomer mindestens eine funktionelle Gruppe ausgewählt aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen; insbesondere enthält es mindestens eine Carbonsäuregruppe. Äußerst bevorzugt enthält das Poly(meth)acrylat der erfindungsgemäßen Haftklebmasse anteilig einpolymerisierte Acrylsäure und/oder Methacrylsäure. All die genannten Gruppen weisen eine Reaktivität mit Epoxidgruppen auf, wodurch das Poly(meth)acrylat vorteilhaft einer thermischen Vernetzung mit eingebrachten Epoxiden zugänglich wird.

Das Poly(meth)acrylat der erfindungsgemäßen Haftklebemasse kann bevorzugt auf die folgende Monomerzusammensetzung zurückgeführt werden:

a) mindestens ein Acrylsäureester und/oder Methacrylsäureester der folgenden Formel (1)

$$CH_2=C(R^I)(COO^{II}) \qquad (1),$$

worin $R^I$ = H oder $CH_3$ und $R^{II}$ ein Alkylrest mit 4 bis 18 C-Atomen ist;

b) mindestens ein olefinisch ungesättigtes Monomer mit mindestens einer funktionellen Gruppe ausgewählt aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen;

c) optional weitere Acrylsäureester und/oder Methacrylsäureester und/oder olefinisch ungesättigte Monomere, die mit der Komponente (a) copolymerisierbar sind.

Es ist besonders vorteilhaft, die Monomere der Komponente a) mit einem Anteil von 45 bis 99 Gew.-%, die Monomere der Komponente b) mit einem Anteil von 1 bis 15 Gew.-% und die Monomere der Komponente c) mit einem Anteil von 0 bis 40 Gew.-% zu wählen, wobei die Angaben auf die Monomermischung für das Basispolymer ohne Zusätze eventueller Additive wie Harze etc. bezogen sind.

Die Monomere der Komponente a) sind allgemein weichmachende, eher unpolare Monomere. Besonders bevorzugt ist $R^{II}$ in den Monomeren a) ein Alkylrest mit 4 bis 10 C-Atomen oder 2-Propylheptylacrylat oder 2-Propylheptylmethacrylat. Die Monomere der Formel (1) sind insbesondere ausgewählt aus der Gruppe bestehend aus n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, 2-Ethylhexylacrylat, 2-Ethylhexylmethacrylat, 2-Propylheptylacrylat und 2-Propylheptylmethacrylat.

Die Monomere der Komponente b) sind besonders bevorzugt ausgewählt aus der Gruppe bestehend aus Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, insbesondere 2-Hydroxyethylacrylat, Hydroxypropylacrylat, insbesondere 3-Hydroxypropylacrylat, Hydroxybutylacrylat, insbesondere 4-Hydroxybutylacrylat, Hydroxyhexylacrylat, insbesondere 6-Hydroxyhexylacrylat, Hydroxyethylmethacrylat, insbesondere 2-Hydroxyethylmethacrylat, Hydroxypropylmethacrylat, insbesondere 3-Hydroxypropylmethacrylat, Hydroxybutylmethacrylat, insbesondere 4-Hydroxybutylmethacrylat, Hydroxyhexylmethacrylat, insbesondere 6-Hydroxyhexylmethacrylat, Allylalkohol, Glycidylacrylat, Glycidylmethacrylat.

Beispielhafte Monomere der Komponente c) sind:

Methylacrylat, Ethylacrylat, Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, 3-Methoxyacrylsäuremethylester, 3-Methoxybutylacrylat, 2-Phenoxyethylmethacrylat, Butyldiglykolmethacrylat, Ethylenglycolacrylat, Ethylenglycolmonomethylacrylat, Methoxypolyethylenglykolmethacrylat 350, Methoxypolyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluorethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid; N,N-Dialkyl-substituierte Amide wie beispielsweise N,N-Dimethylacrylamid und N,N-Dimethylmethacrylamid; N-Benzylacrylamid, N-Isopropylacrylamid, N-tert-Butylacrylamid, N-tert-Octylacrylamid, N-Methylolacrylamid, N-Methylolmethacrylamid, Acrylnitril, Methacrylnitril; Vinylether wie Vinylmethylether, Ethylvinylether, Vinylisobutylether; Vinylester wie Vinylacetat; Vinylhalogenide, Vinylidenhalogenide, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol; Makromonomere wie 2-Polystyrolethylmethacrylat (gewichtsmittleres Molekulargewicht Mw, bestimmt mittels GPC, von 4000 bis 13000 g/mol), Poly(methylmethacrylat)ethylmethacrylat (Mw von 2000 bis 8000 g/mol).

Monomere der Komponente c) können vorteilhaft auch derart gewählt werden, dass sie funktionelle Gruppen enthalten, die eine nachfolgende strahlenchemische Vernetzung (beispielsweise durch Elektronenstrahlen oder UV-Strahlung) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid und Allylacrylat.

Die Herstellung der Poly(meth)acrylate geschieht bevorzugt durch konventionelle radikalische Polymerisationen oder kontrollierte radikalische Polymerisationen. Die Poly(meth)acrylate können durch Copolymerisation der Monomere unter Verwendung üblicher Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Bevorzugt werden die Poly(meth)acrylate durch Copolymerisation der Monomere in Lösungsmitteln, besonders bevorzugt in Lösungsmitteln mit einem Siedebereich von 50 bis 150 °C, insbesondere von 60 bis 120 °C, unter Verwendung von 0,01 bis 5 Gew.-%, insbesondere von 0,1 bis 2 Gew.-%, jeweils bezogen auf das Gesamtgewicht der Monomeren, an Polymerisationsinitiatoren hergestellt.

Prinzipiell eignen sich alle üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat und Benzpinacol. Bevorzugte radikalische Initiatoren sind 2,2'-Azobis(2-methylbutyronitril) (Vazo® 67™ der Firma DuPont) oder 2,2'-Azobis(2-methylpropionitril) (2,2'-Azobisisobutyronitril; AIBN; Vazo® 64™ der Firma DuPont).

Bevorzugte Lösungsmittel für die Herstellung der Poly(meth)acrylate sind Alkohole wie Methanol, Ethanol, n- und iso-Propanol, n- und iso-Butanol, insbesondere Isopropanol und/oder Isobutanol; Kohlenwasserstoffe wie Toluol und insbesondere Benzine eines Siedebereichs von 60 bis 120 °C; Ketone, insbesondere Aceton, Methylethylketon, Methylisobutylketon; Ester wie Essigsäureethylester sowie Gemische der vorstehend genannten Lösungsmittel. Besonders bevorzugte Lösungsmittel sind Gemische, die Isopropanol in Mengen von 2 bis 15 Gew.-%, insbesondere von 3 bis 10 Gew.-%, jeweils bezogen auf das eingesetzte Lösungsmittelgemisch, enthalten.

Bevorzugt erfolgt nach der Herstellung (Polymerisation) der Poly(meth)acrylate eine Aufkonzentration, und die

weitere Verarbeitung der Poly(meth)acrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte Mw der Polyacrylate liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 150.000 bis 1.000.000 g/mol. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Die Angaben der zahlenmittleren Molmasse Mn und der gewichtsmittleren Molmasse Mw in dieser Schrift beziehen sich auf die an sich bekannte Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C.

Als Vorsäule wird eine Säule Typ PSS-SDV, 5 µm,103Å, 8,0 mm * 50 mm (Angaben hier und im Folgenden in der Reihenfolge: Typ, Partikelgrösse, Porosität, Innendurchmesser * Länge; 1 Å = 10-10 m) verwendet. Zur Auftrennung wird eine Kombination der Säulen des Typs PSS-SDV, 5 µm,103 Ä sowie 105 Å und 106 Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei Poly(meth)acrylaten gegen PMMA-Standards (Polymethylmethacrylat-Kalibrierung) und sonst (Harze, Elastomere) gegen PS-Standards (Polystyrol-Kalibrierung).

Die Poly(meth)acrylate haben vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität von Polymeren.

Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

Bevorzugt weist das Poly(meth)acrylat der erfindungsgemäßen Haftklebmasse eine Polydispersität PD < 4 und somit eine relativ enge Molekulargewichtsverteilung auf. Darauf basierende Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Poly(meth)acrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letztere besonders gut geeignet sind. Auch über N-Oxyle lassen sich entsprechende Poly(meth)acrylate herstellen. Ferner lässt sich in vorteilhafter Weise die Atom Transfer Radical Polymerization (ATRP) zur Synthese eng verteilter Poly(meth)acrylate einsetzen, wobei als Initiator bevorzugt monofunktionelle oder difunktionelle sekundäre oder tertiäre Halogenide und zur Abstraktion der Halogenide Cu-, Ni- , Fe-, Pd-, Pt-, Ru-, Os-, Rh-, Co-, Ir-, Ag- oder Au-Komplexe eingesetzt werden. Auch RAFT-Polymerisation ist geeignet.

Die Poly(meth)acrylate der erfindungsgemäßen Haftklebmasse sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die

- sowohl eine ausreichend lange Verarbeitungszeit gewährleisten, sodass es nicht zu einer Vergelung während des Verarbeitungsprozesses, insbesondere des Extrusionsprozesses, kommt,

- als auch zu einer schnellen Nachvernetzung des Polymers auf den gewünschten Vernetzungsgrad bei niedrigeren Temperaturen als der Verarbeitungstemperatur, insbesondere bei Raumtemperatur, führen.

Möglich ist beispielsweise eine Kombination aus Carboxy-, Amino- und/oder Hydroxygruppen enthaltenden Polymeren und Isocyanaten, insbesondere aliphatischen oder blockierten Isocyanaten, beispielsweise mit Aminen deaktivierten trimerisierten Isocyanaten, als Vernetzer. Geeignete Isocyanate sind insbesondere trimerisierte Derivate von MDI [4,4-Methylendi(phenylisocyanat)], HDI [Hexamethylendiisocyanat, 1,6-Hexylendiisocyanat] und IPDI [Isophorondiisocyanat, 5-Isocyanato-1-isocyanatomethyl-1,3,3-trimethylcyclohexan].

Bevorzugt werden thermische Vernetzer zu 0,1 bis 5 Gew.-%, insbesondere zu 0,2 bis 1 Gew.-%, bezogen auf die Gesamtmenge des zu vernetzenden Polymers, eingesetzt.

Auch eine Vernetzung über Komplexbildner, auch als Chelate bezeichnet, ist möglich. Ein bevorzugter Komplexbildner ist beispielsweise Aluminiumacetylacetonat.

Bevorzugt sind die Poly(meth)acrylate der erfindungsgemäßen Haftklebmasse mittels Epoxid(en) bzw. mittels einer oder mehrerer epoxidgruppenhaltiger Substanz(en) vernetzt. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole, insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche; Epoxyether mehrwertiger Phenole, insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon sowie deren Hydroxyethylether; Phenol-Formaldehyd-Kondensationsprodukte wie Phenolalkohole und Phenolaldehydharze; S- und N-haltige Epoxide, zum Beispiel N,N-Diglycidylanilin und N,N'-Dimethyldiglycidyl-4,4-Diaminodiphenylmethan; sowie Epoxide, welche nach üblichen Verfahren aus mehrfach ungesättigten Carbonsäuren oder einfach ungesättigten Carbonsäureestern ungesättigter Alkohole hergestellt worden sind; Glycidylester; Polyglycidylester, die durch Polymerisation oder Mischpolymerisation von Glycidylestern ungesättigter Säuren gewonnen werden können oder aus anderen sauren Verbindungen, zum Beispiel aus Cyanursäure, Diglycidylsulfid oder cyclischem Trimethylentrisulfon bzw. dessen Derivaten erhältlich sind.

Sehr geeignete Ether sind beispielsweise 1,4-Butandioldiglycidether, Polyglycerol-3-glycidether, Cyclohexandimethanoldiglycidether, Glycerintriglycidether, Neopentylglykoldiglycidether, Pentaerythrittetraglycidether, 1,6-Hexandioldiglycidether, Polypropylenglykoldiglycidether, Trimethylolpropantriglycidether, Pentaerythrittetraglycidether, Bisphenol-A-diglycidether und Bisphenol-F-diglycidether.

Weitere bevorzugte Epoxide sind cycloaliphatische Epoxide wie 3,4-Epoxycyclohexylmethyl-3,4-epoxycyclohexancarboxylat (UVACure1500).

Besonders bevorzugt sind die Poly(meth)acrylate mittels eines Vernetzer-Beschleuniger-Systems ("Vernetzungssystem") vernetzt, um eine bessere Kontrolle sowohl über die Verarbeitungszeit, die Vernetzungskinetik sowie den Vernetzungsgrad zu erhalten. Das Vernetzer-Beschleuniger-System umfasst bevorzugt zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltiger Verbindungen beschleunigend wirkende Substanz als Beschleuniger.

Als Beschleuniger werden erfindungsgemäß besonders bevorzugt Amine eingesetzt. Diese sind formell als Substitutionsprodukte des Ammoniaks aufzufassen; in den folgenden Formeln sind die Substituenten durch "R" dargestellt und umfassen insbesondere Alkyl- und/oder Arylreste. Besonders bevorzugt werden solche Amine eingesetzt, die mit den zu vernetzenden Polymeren keine oder nur geringfügige Reaktionen eingehen.

Prinzipiell können als Beschleuniger sowohl primäre (NRH2), sekundäre (NR2H) als auch tertiäre Amine (NR3) gewählt werden, selbstverständlich auch solche, die mehrere primäre und/oder sekundäre und/oder tertiäre Aminogruppen aufweisen. Besonders bevorzugte Beschleuniger sind tertiäre Amine wie beispielsweise Triethylamin, Triethylendiamin, Benzyldimethylamin, Dimethylaminomethylphenol, 2,4,6-Tris-(N,N-dimethylaminomethyl)-phenol, N,N'-Bis(3-(dimethylamino)propyl)harnstoff. Weitere bevorzugte Beschleuniger sind multifunktionelle Amine wie Diamine, Triamine und/oder Tetramine, zum Beispiel Diethylentriamin, Triethylentetramin, Trimethylhexamethylendiamin.

Weitere bevorzugte Beschleuniger sind Aminoalkohole, insbesondere sekundäre und/oder tertiäre Aminoalkohole, wobei im Falle mehrerer Aminofunktionalitäten pro Molekül bevorzugt mindestens eine, besonders bevorzugt alle Aminofunktionalitäten sekundär und/oder tertiär sind. Besonders bevorzugte, derartige Beschleuniger sind Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1 ,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und N,N,N'-Trimethylaminopropylethanolamin.

Weitere geeignete Beschleuniger sind Pyridin, Imidazole wie beispielsweise 2-Methylimidazol und 1,8-Diazabicyclo[5.4.0]undec-7-en. Auch cycloaliphatische Polyamine können als Beschleuniger eingesetzt werden. Geeignet sind auch Beschleuniger auf Phosphorbasis wie Phosphine und/oder Phosphoniumverbindungen, beispielsweise Triphenylphosphin oder Tetraphenylphosphoniumtetraphenylborat.

Auch quartäre Ammoniumverbindungen können als Beschleuniger verwendet werden; Beispiele sind Tetrabutylammoniumhydroxid, Cetyltrimethylammoniumbromid und Benzalkoniumchlorid.

Poly(meth)acrylat und Synthesekautschuk liegen in der erfindungsgemäßen Haftklebmasse bevorzugt-wie allgemein immer in derartigen Haftklebmassen -jeweils für sich als homogene Phasen vor. Besonders bevorzugt liegt dabei der Synthesekautschuk im Poly(meth)acrylat dispergiert vor.

Bevorzugt sind also die in der Haftklebmasse enthaltenen Poly(meth)acrylate und Synthesekautschuke bei 23 °C nicht bis zur Homogenität miteinander mischbar. Die erfindungsgemäße Haftklebmasse liegt somit zumindest mikroskopisch und zumindest bei Raumtemperatur bevorzugt in mindestens zweiphasiger Morphologie vor. Besonders bevorzugt sind Poly(meth)acrylat(e) und Synthesekautschuk(e) in einem Temperaturbereich von -20 °C bis 90 °C, insbesondere von 0 °C bis 60 °C nicht homogen miteinander mischbar, so dass die Haftklebmasse in diesen Temperaturbereichen zumindest mikroskopisch mindestens zweiphasig vorliegt.

Komponenten sind im Sinne dieser Schrift als dann "nicht homogen miteinander mischbar" definiert, wenn sich auch nach innigem Vermischen die Ausbildung zumindest zweier stabiler Phasen physikalisch und/oder chemisch zumindest mikroskopisch nachweisen lässt, wobei die eine Phase reich an der einen Komponente und die zweite Phase reich an der anderen Komponente ist. Ein Vorliegen vernachlässigbar geringer Mengen der einen Komponente in der anderen, das einer Ausbildung der Mehrphasigkeit nicht entgegensteht, wird dabei als unbeachtlich angesehen. So können in der Poly(meth)acrylatphase geringe Mengen an Synthesekautschuk und/oder in der Synthesekautschukphase geringe Mengen an Poly(meth)acrylat-Komponente vorliegen, bei denen es sich nicht um wesentliche Mengen handelt, welche die Phasenseparation beeinflussen.

Die Phasentrennung kann insbesondere derart realisiert sein, dass diskrete Bereiche ("Domänen"), die reich an Synthesekautschuk sind - also im Wesentlichen aus Synthesekautschuk gebildet sind -, in einer kontinuierlichen Matrix, die reich an Poly(meth)acrylat ist - also im Wesentlichen aus Poly(meth)acrylat gebildet ist -, vorliegen.

Ein geeignetes Analysesystem für eine Phasentrennung ist beispielweise die Raster-Elektronenmikroskopie. Phasenseparation kann sich aber beispielweise auch dadurch erkennen lassen, dass die unterschiedlichen Phasen zwei voneinander unabhängige Glasübergangstemperaturen bei der Dynamischen Differenzkalorimetrie (DDK, DSC) oder der Dynamisch-Mechanischen Analyse (DMA) aufweisen. Phasentrennung liegt erfindungsgemäß insbesondere dann vor, wenn sie sich durch mindestens eine der Analysenmethoden eindeutig zeigen lässt.

Innerhalb der Synthesekautschuk-reichen Domänen kann als Feinstruktur zudem zusätzliche Mehrphasigkeit vorliegen, wobei die A-Blöcke eine Phase und die B-Blöcke eine zweite Phase bilden.

In einer Ausführungsform der Erfindung sind eine oder beide Oberflächen der Haftklebemasseschichten physikalisch und/oder chemisch vorbehandelt. Eine solche Vorbehandlung kann beispielweise durch Plasmavorbehandlung erfolgen. Sofern beide Oberflächen der Haftklebemasseschichten vorbehandelt sind, kann die Vorbehandlung jeder Oberfläche unterschiedlich erfolgen oder insbesondere können beide Oberflächen gleich vorbehandelt sein.

Die Plasma-Behandlung - insbesondere Niederdruck-Plasmabehandlung - ist ein bekanntes Verfahren zur Oberflächenvorbehandlung von Klebemassen. Das Plasma führt zu einer Aktivierung der Oberfläche im Sinne einer höheren Reaktivität. Dabei kommt es zu chemischen Veränderungen der Oberfläche, wodurch zum Beispiel das Verhalten der Klebemasse gegenüber polaren und unpolaren Oberflächen beeinflusst werden kann. Bei dieser Vorbehandlung handelt es sich im Wesentlichen um Oberflächenphänomene.

Die erfindungsgemäßen Haftklebemasseschichten sind typischerweise 10 bis 200 $\mu$m dick, vorzugsweise 15 bis 100 $\mu$m dick und insbesondere 25 bis 60 $\mu$m dick.

d) Klebeband

Damit Klebebänder durch dehnendes Verstrecken leicht und rückstandsfrei wieder abgelöst werden können, müssen sie neben den oben beschriebenen klebtechnischen auch bestimmte mechanische Eigenschaften besitzen. Besonders vorteilhaft ist das Verhältnis der Reißkraft und der Strippkraft größer als zwei, bevorzugt größer als drei. Dabei ist die Strippkraft diejenige Kraft, die aufgewendet werden muss, um ein Klebeband aus einer Klebefuge durch dehnendes Verstrecken in der Verklebungsebene wiederabzulösen. Diese Strippkraft setzt sich aus der Kraft, die wie oben beschrieben für das Ablösen des Klebebands von den Verklebungsuntergründen nötig ist, und der Kraft, die zur Verformung des Klebebands aufgewendet werden muss, zusammen. Die zur Verformung des Klebebands erforderliche Kraft ist abhängig von der Dicke des Klebebands. Die zum Ablösen benötigte Kraft ist dagegen in dem betrachteten Dickenbereich des Klebebands unabhängig von der Dicke des Klebebands.

Daher ist eine Ausführungsform bevorzugt, in der das Klebeband ein Verhältnis von Strippkraft $F_{Stripp}$ zu Bruchkraft $F_{Bruch}$ von weniger als 60 %, vorzugsweise weniger als 50 % aufweist.

Der Träger ist vorzugsweise mindestens einseitig mit der Haftklebemasse beschichtet, besonders bevorzugt jedoch beidseitig. Das Klebeband kann daher ein einseitiges Klebeband oder ein doppelseitiges Klebeband sein, vorzugsweise ist es doppelseitig.

Die Dicke des Klebebands kann je nach Anwendung gewählt werden. In einer bevorzugten Ausführungsform

weist das Klebeband eine Dicke von 30 bis 350 µm,vorzugsweise 30 bis 250 µm und besonders bevorzugt 50 bis 200 µm auf.

e) Herstellungsverfahren

Ein weiterer Gegenstand der vorliegenden Erfindung ist ein Verfahren zur Herstellung des erfindungsgemäßen Klebebands.

i) Träger auf Basis von TPU

In einer ersten Alternative betrifft das erfindungsgemäße Verfahren ein zur Herstellung eines Klebebands gemäß der vorliegenden Erfindung, bei dem ein vernetztes Polyurethan,

(i) auf einen temporären Träger extrudiert wird und mindestens einseitig, vorzugsweise beidseitig, mit einer Haftklebemasseschicht auf Basis von Vinylaromatenblockcopolymer kombiniert wird, oder

(ii) auf eine Haftklebemasseschicht auf Basis von Vinylaromatenblockcopolymer unter Erhalt eines Trägers extrudiert wird, wobei vorzugsweise der Träger auf der der Haftklebemasseschicht gegenüberliegenden Seite mit einer weiteren Haftklebemasseschicht auf Basis von Vinylaromatenblockcopolymer kombiniert wird,

so dass sich ein Klebeband ergibt.

Alle Bestandteile der herzustellenden Rezeptur basierend auf TPU werden zunächst in einem Granulattrockner getrocknet und anschließend einem kontinuierlichen Misch- oder Förderaggregat mit Mischteil über Dosieröffnungen und Dosier- oder Fördersysteme zugeführt. Die Temperaturführung erfolgt entsprechend der benötigten optimalen Bedingungen für die Herstellung einer homogenen Mischung.

Der Auslass des kontinuierlichen Förderaggregates mit Mischteil oder Mischaggregates bzw. die weiteren Bauteile zur Förderung des Extrudats zur Vorausformung über eine Düse oder Verteilerkanals oder direkt zur Beschichtungseinheit können unterschiedlich gestaltet sein. Um eine Flachfolie zu beschichten, eignet sich eine Breitschlitzdüse zur Vorausformung des Exdrudats bzw. eines Schmelzefilms. Dieser kann entweder direkt auf eine rotierende, in der Regel gekühlte Walze abgelegt (sogenannte Chillroll) werden, wobei zusätzlich über die Abzugsgeschwindigkeit die Schichtdicke reguliert werden kann. Oder es kann direkt auf ein Vormaterial, wie z.B. (temporären) Träger oder Funktionsschicht, wie insbesondere eine Haftklebemasseschicht, beschichtet werden.

In einer besonders vorteilhaften Ausführungsform des erfindungsgemäßen Verfahrens wird das zuvor homogenisierte Extrudat über eine Breitschlitzdüse zu einem Schmelzefilm ausgeformt und direkt auf eine erste Klebmassenschicht beschichtet, die auf einem temporären Träger, wie insbesondere einem (silikonisiertem) Liner, angeordnet ist. Diese vorgefertigte Funktionsschichtwird zuvor vorzugsweise über eine Abwickelstation über die Kühlwalze zugeführt.

Dieser Verbund aus temporärem Träger (Liner), Klebmassen- und PU-Schicht wird vor der Aufwicklung zum Ballen vorzugsweise mit einer zweiten vorgefertigten Klebmassenschicht auf einem temporären Träger, wie insbesondere Releaseliner, kaschiert. Das Endprodukt besteht nun aus drei Schichten, Klebmasse-PU-Träger-Klebmasse, eingedeckt zwischen zwei temporären Trägern, wie insbesondere Linern. Ein temporärer Träger (wie insbesondere ein Liner) kann vor der Aufwicklung zum Ballen ausgedeckt werden.

Diese Verfahrensweise hat viele Vorteile: ein mehrlagiges Produkt kann besonders effizient hergestellt werden, die Verbundfestigkeit/ Verankerung zwischen Klebmasse oder Trägerschicht jeglicher Art und TPU-Schicht wird verbessert, der oft problematische Zwischenschritt der Transferbeschichtung (TPU auf Release-Träger) wird vermieden. So werden auch besonders weiche TPU-Typen für die Produktion zugänglich und Prozesshilfsmittel, wie Wachse und/oder Gleitmittel, koextrudierte Stützträger oder zusätzliche Hilfsliner wie sie üblicherweise bei der Herstellung von TPU-Trägern benötigt werden, entfallen.

Im Rahmen des erfindungsgemäßen Verfahrens können auch geschäumte Träger auf Basis von TPU eingesetzt werden.

Alle Bestandteile der herzustellenden Rezeptur, basierend auf TPU (nach Trocknung), inklusive der unexpandierten Mikroballons, werden hierzu vorzugsweise einem kontinuierlichen Misch- oder Förderaggregat mit einem Mischteil über eine Dosieröffnung und Dosier- oder Fördersysteme zugeführt. Die Temperaturführung erfolgt entsprechend der benötigten optimalen Bedingungen für die Herstellung einer homogenen Mischung und der Schäumung der Mikroballons. Bis zum Auslass wird vorzugsweise ein kontinuierlicher Gegendruck aufrechterhalten, um eine vorzeitige Expansion der Mikroballons zu vermeiden.

Der Auslass eines kontinuierlichen Förderaggregates mit Mischteil oder Mischaggregates bzw. die weiteren Bauteile zur Förderung des Extrudats zur Vorausformung über eine Düse oder Verteilerkanals oder direkt zur Beschichtungseinheit können unterschiedlich gestaltet sein. Um eine Flachfolie zu beschichten, eignet sich eine Breitschlitzdüse

zur Vorausformung des Exdrudats bzw. eines Schmelzefilms. Das Durchbrechen der beschichteten Oberfläche durch die expandierten oder expandierenden Mikroballons wird vorzugsweise dadurch verhindert, dass ein Gegendruck während des Beschichtungsvorgangs aufgebaut wird. Somit kann eine raue Oberfläche verhindert werden, welche wiederum eine schlechte Verankerung zur Haftklebemassenschicht hervorruft. Der Gegendruck kann z.B. eine Gegendruckwalze oder Presseur auf der Beschichtungswalze sein oder die Beschichtung wird direkt in einem Kalander durchgeführt. Auch hier wird vorzugsweise direkt auf ein Vormaterial, wie z.B. einen (temporären) Träger oder eine auf einen temporären Träger aufgebrachte Haftklebemasseschicht, beschichtet.

Dieser Verbund aus temporärem Träger (Liner), Klebmassen- und PU-Schicht wird vor der Aufwicklung zum Ballen vorzugsweise mit einer zweiten vorgefertigten Klebmassenschicht auf einem temporären Träger, wie insbesondere Releaseliner oder jeglicher anderen Art von Trägerschicht auf die gegenüberliegende Seite kaschiert.

Das Endprodukt besteht vorzugsweise aus drei Schichten, Klebmasse- geschäumtem PU Träger-Klebmasse, eingedeckt zwischen zwei temporären Trägern, wie Linern. Ein temporärer Träger (Liner) kann vor der Aufwicklung zum Ballen ausgedeckt werden. Die Direktbeschichtung auf eine Haftklebemassenschicht hat viele Vorteile: ein mehrlagiges Produkt kann besonders effizient hergestellt werden; die Verbundfestigkeit/ Verankerung zwischen Klebmasse und Trägerschicht jeglicher Art oder TPU-Schicht wird verbessert; der oft problematische Zwischenschritt der Transferbeschichtung (TPU auf Release-Träger) wird vermieden. So werden auch besonders weiche TPU Typen für die Produktion zugänglich und Prozesshilfsmittel, wie Wachse und/oder Gleitmittel, koextrudierte Stützträger oder zusätzliche Hilfsliner wie sie üblicherweise bei der Herstellung von TPU-Trägern benötigt werden, entfallen.

Geschlossenzellige, Mikroballons enthaltende TPU-Schäume sind kommerziell nicht erhältlich, so dass dieses erfindungsgemäße Verfahren und die daraus resultierenden Trägerschichten die Basis für innovative Produkte bilden.

Weitere Optionen zur Herstellung offenzelliger TPU-Schäume stehen zur Verfügung: die Zugabe von chemischen Treibmitteln oder die gezielte Injektion von Gas, d.h. physikalischem Treibmittel.

Das chemische Treibmittel kann direkt mit den Ausgangsstoffen in das kontinuierliche Förderaggregat mit Mischteil oder über eine der zusätzlichen Dosieröffnungen hinzugegeben werden. Die Verarbeitung und Beschichtung erfolgen vorzugsweise wie oben beschrieben.

Die Injektion von Gas kann über eine zusätzliche Dosieröffnung in den Extruder in die Schmelzemischung erfolgen. Die Zuführung des Gases erfolgt vorzugsweise geregelt, so dass der Gasanteil in der Mischung und die resultierende Dichte eingestellt werden kann. Die Verarbeitung und Beschichtung erfolgen vorzugsweise wie oben beschrieben.

ii) Träger auf Basis von PUD

Eine alternative Ausführungsform betrifft ein Verfahren zur Herstellung des erfindungsgemäßen Klebebands, bei dem eine Dispersion auf Basis eines Polyurethans und eines Vernetzers

(i) auf einen temporären Träger beschichtet oder getrocknet wird und der sich ergebende Träger mindestens einseitig, vorzugsweise beidseitig, mit einer Haftklebemasseschicht auf Basis von Vinylaromatenblockcopolymer kombiniert wird, oder

(ii) auf eine Haftklebemasseschicht auf Basis von Vinylaromatenblockcopolymer unter Erhalt eines Trägers beschichtet und getrocknet wird, wobei vorzugsweise der Träger auf der der Haftklebemasseschicht gegenüberliegenden Seite mit einer weiteren Haftklebemassschicht auf Basis von Vinylaromatenblockcopolymer kombiniert wird,

so dass sich ein Klebeband ergibt.

Für die Herstellung einer homogenen, blasenfreien Dispersionsmischung wird ein für Dispersionen geeignetes Rührequipment empfohlen. Vernetzer, Verdicker und / oder andere Additive werden zumeist mit Wasser vordispergiert und anschließend unter stetigem vorsichtigem Rühren portionsweise der PU-Dispersion zugeführt.

Beim Rührprozess sollten Tromben oder zu schnelle Drehzahlen vermieden werden, um ein ungewolltes Einrühren von Luft zu verhindern. Es ist ratsam, die Abmischung einige Stunden vor der Beschichtung anzufertigen, um ein Entweichen von eingerührten Luftbläschen zu begünstigen.

Die Beschichtung kann über unterschiedliche Auftragswerke, wie z.B. Rakel, Düse oder Verteilerkanäle usw. erfolgen. Die Trocknung der beschichteten PU-Dispersion erfolgt vorzugsweise über Wärmezufuhr in einem Trockenkanal mit unterschiedlichen Heizzonen. Die Beschichtung der PU-Dispersion kann entweder auf einen (temporären) Träger oder direkt auf eine Haftklebemasseschicht, erfolgen. Nach der Trocknung und vor der Aufwicklung wird vorzugsweise eine zweite Haftklebemassenschicht auf die gegenüberliegende Seite dazu kaschiert, so dass ein mehrlagiges Produkt in einem Schritt hergestellt werden kann. Der so hergestellte Mehrschichtverbund wird vorzugsweise zu einem Ballen aufgewickelt. Ein Liner oder anderer Hilfsträger können zuvor ausgedeckt werden.

Diese Verfahrensweise hat viele Vorteile: ein mehrlagiges Produkt kann besonders effizient hergestellt werden,

die Verbundfestigkeit/ Verankerung zwischen Klebmasse Trägerschicht jeglicher Art oder PU-Schicht wird verbessert, der oft problematische Zwischenschritt der Transferbeschichtung (PU auf Release-Träger) wird vermieden.

Die PU-basierte Trägerschicht aus Dispersion oder das Klebeband, das diese Schicht enthält, kann einer Temperierung bei mindestens 150 °C unterzogen werden, um die Zugfestigkeit zu optimieren.

In einer bevorzugten Ausführungsform erfolgt die Herstellung unter Verwendung eines Trägers auf Basis einer schäumbaren PU-Dispersionen.

Für die Herstellung einer homogenen, blasenfreien, mit Mikroballons schäumbaren Dispersionsmischung wird ein für Dispersionen geeignetes Rührequipment empfohlen. Vernetzer, Verdicker und/oder andere Additive, wie auch die unexpandierten Mikroballons werden vorzugsweise mit Wasser vordispergiert und anschließend unter stetigem, vorsichtigem Rühren portionsweise der PU-Dispersion zugeführt. Beim Rührprozess sollten Tromben oder zu schnelle Drehzahlen vermieden werden, um ein ungewolltes Einrühren von Luft zu verhindern. Es ist ratsam, die Abmischung einige Stunden vor der Beschichtung anzufertigen, um ein Entweichen von eingerührten Luftbläschen zu begünstigen.

Die Beschichtung kann über unterschiedliche Auftragswerke, wie z.B. Rakel, Düse oder Verteilerkanäle usw. erfolgen. Die Trocknung der beschichteten PU-Dispersion erfolgt vorzugsweise über Wärmezufuhr unterhalb der Schäumungstemperatur in einem Trockenkanal mit unterschiedlichen Heizzonen. Die Beschichtung der PU-Dispersion kann entweder auf einen (temporären) Träger oder direkt auf eine Haftklebemasseschicht erfolgen. Nach der Trocknung und vor der Aufwicklung wird vorzugsweise eine zweite Haftklebemasseschicht auf die gegenüberliegende Seite dazu kaschiert werden, so dass ein mehrlagiges Produkt in einem Schritt hergestellt werden kann.

Der so hergestellte Mehrschichtverbund wird vorzugsweise zu einem Ballen aufgewickelt. Ein Liner oder anderer Hilfsträger können zuvor ausgedeckt werden. Diese Verfahrensweise hat viele Vorteile: ein mehrlagiges Produkt kann besonders effizient hergestellt werden, die Verbundfestigkeit/ Verankerung zwischen Klebmasse oder Trägerschicht jeglicher Art oder PU-Schicht wird verbessert, der oft problematische Zwischenschritt der Transferbeschichtung (PU auf Release-Träger) wird vermieden.

In einem weiteren Arbeitsschritt wird der Gesamtverbund oder eine einzelne Schicht des schäumbaren PU-Trägers durch weitere Zufuhr von Wärme durch einen Heizkanal oder heizbare Kontaktwalzen teilweise oder vollständig geschäumt bzw. die Mikroballons expandiert. Durch die doppelte Eindeckung des schäumbaren PU-Trägers mit Träger, Hilfsliner oder Haftklebemasseschicht wird ein Durchbrechen der Oberfläche der expandierenden Mikroballons verhindert, so dass eine gute Verbundfestigkeit zwischen den einzelnen Schichten erreicht wird. Durch die Schäumung mit Mikroballons wird ein geschlossenzelliger PU-Schaum erzeugt.

In einer weiteren Ausführungsform kann die PU-Dispersion mit vorexpandierten Mikroballons versetzt werden, so dass ebenfalls ein geschäumter PU-Träger erzeugt wird. Durch Kaschierung mindestens einer Haftklebemasseschicht kann ebenfalls ein ein- oder doppelseitiges Klebeband hergestellt werden.

Durch gezieltes Einrühren von Luft, dem sogenannten "Frothing" kann zudem ein offenzelliger PU-Schaum hergestellt werden. Hier wird durch dafür geeignetes Rührequipment und besonderen Rührbedingungen der Lufteinschlag kontrolliert provoziert. Der weitere Herstellprozess erfolgt vorzugsweise analog dem oben beschriebenen Verfahren.

Das erfindungsgemäße Klebeband zeichnet sich insbesondere dadurch aus, dass es sich mit relativ geringem Kraftaufwand rückstands- und zerstörungsfrei wieder ablösen lässt, wodurch es insbesondere für die Herstellung von elektronischen Bauteilen geeignet ist. Daher ist ein weiterer Gegenstand der vorliegenden Erfindung die Verwendung des erfindungsgemäßen Klebebands zur Verklebung von Bauteilen in elektronischen Geräten.

Ein weiterer Gegenstand der vorliegenden Erfindung ist ein elektronisches Gerät umfassend ein erstes Bauteil und ein zweites Bauteil, die mit einem erfindungsgemäßen Klebeband verklebt sind.

Nachfolgend wird die Erfindung durch einige beispielhafte Klebebänder näher erläutert. Anhand der nachfolgend beschriebenen Beispiele werden besonders vorteilhafte Ausführungen der Erfindung näher erläutert, ohne damit die Erfindung unnötig einschränken zu wollen.

**Beispiele:**

Tabelle 1 zeigt die in den (Vergleichs-)Beispielen eingesetzten Rohstoffe bzw. eingesetzten Materialien. Die Tabellen 2 und 3 zeigen die Rezepturen der in den (Vergleichs-)Beispielen hergestellten Träger und Klebemasseschichten.

Tabelle 1: In den (Vergleichs-)Beispielen eingesetzte Rohstoffe bzw. Materialien.

| **Rohstoff** | **Hersteller/ Lieferant** | **Beschreibung** |
|---|---|---|
| Impranil DL 1116 (zur Herstellung der hier "PUD1 "bzw. "PUD2" bzw. "PUD3" bzw. "PUD4" bzw. "PUD5" bzw. "PUD6" genannten Träger) | Covestro | anionisch stabilisierte Polyester-PU-dispersion, 100% Modul (Film aus mit 1 Gew.-% Borchigel ALA verdickter Dispersion) = 1,4 MPa nach DIN 53504 |
| Ortegol PV 301 | Evonik | Polyurethanlösung (Verdicker) |
| Imprafix 2794 | Covestro | Geblocktes aliphatisches Polyisocyanat auf Wasserbasis, NCO-Gehalt (blockiert, berechnet auf Festharz) 11,5 ± 0,5 |
| Levanox weiß R-LF | Lanxess, Rheinchemie Additives | wässrige, lösemittelfreie, anorganische Pigmentpräparation; Pigmentgehalt ca. 70% |
| Expancel 920 DU 20 | Nouryon | Unexpandierte, expandierbare, trockene Mikroballons mit einem mittleren Durch-messer nach Expansion von 20 μm |
| Platilon U04 (hier Träger "TPU1" genannt): Folie aus Blasfolienextrusion Produktionsanlage | epurex | Blasfolie (TPU-Folie) in den Dicken 30 μm, 50 μm und 100 μm, jeweils einseitig mit PE-Stützträger ausgerüstet, Shore-Härte A = 86 |
| Kraton D 1116 AT | Kraton Performance Polymers, Inc. | Styrol-Butadiene-Styrol Block copolymer |
| Kraton D 1118 ES | Kraton Performance Polymers, Inc. | Elastomer: Styrol-Butadien-Styrol-Triblockcopolymer mit 78 Gew.-% Diblock, Blockpolystyrolgehalt: 33 Gew.- % |
| Kraton D 1152 ES | Kraton Performance Polymers, Inc. | Styrol-Butadien-Styrol-Triblockcopolymer |
| Irganox 1010 | BASF SE | Alterungsschutzmittel |
| Wingtack 10 | Cray Valley USA, LLC | Flüssiges Kohlenwasserstoffharz (Weich harz) |
| Dercolyte A115 | DRT | festes α-Pinen-Klebharz, Ring und Ball-Erweichungstemperatur: 115 °C |
| Acrylsäure | BASF SE | Acrylsäure |
| Butylacrylat | CIM Chemicals AG | Butylacrylat |
| Methylacrylat | BASF SE | Methylacrylat |
| Ethylhexylacrylat | CIM Chemicals AG | Ethylhexylacrylat |
| Phenoxyethylacrylat | BASF SE | Phenoxyethylacrylat |
| Erisys GA-240 | CVC Thermoset Specialites | N,N,N',N'-tetrakis(2,3-epoxypropyl)-m-xylene-a, a'-diamine |

(fortgesetzt)

| Rohstoff | Hersteller/ Lieferant | Beschreibung |
|---|---|---|
| Aluminiumacetylacetonat | Merck KGaA | Aluminium-acetylacetonat |

Tabelle 2: Rezepturen der in den (Vergleichs-)Beispielen hergestellten Träger.

| Träger-Bezeichnung | Komponente | Rohstoff | Anteil |
|---|---|---|---|
| Kernschicht TPU 1 | Platilon U04 | epurex, Folie wurde zugekauft | |
| | | | |
| Kernschicht PUD 1 | PU-Dispersion | Impranil DL 1116 | 99,0 Gew.-% |
| | Verdicker | Ortegol PV 301 | 0,6 Gew.-% |
| Kernschicht PUD 2 | PU-Dispersion | Impranil DL 1116 | 97,0 Gew.-% |
| | Farbstoff | Lanxess weiß R-LF | 2,0 Gew.-% |
| | Verdicker | Ortegol PV 301 | 0,6 Gew.-% |
| Kernschicht PUD 3 | PU-Dispersion | Impranil DL 1116 | 98,4 Gew.-% |
| | Farbstoff | Lanxess weiß R-LF | 2,0 Gew.-% |
| | Vernetzer | Imprafix 2794 | 1,0 Gew.-% |
| | Verdicker | Ortegol PV 301 | 0,6 Gew.-% |
| Kernschicht PUD 4 | PU-Dispersion | Impranil DL 1116 | 97,4 Gew.-% |
| | Farbstoff | Lanxess weiß R-LF | 2,0 Gew.-% |
| | Vernetzer | Imprafix 2794 | 2,0 Gew.-% |
| | Verdicker | Ortegol PV 301 | 0,6 Gew.-% |
| Kernschicht PUD 5 | PU-Dispersion | Impranil DL 1116 | 94,4 Gew.-% |
| | Farbstoff | Lanxess weiß R-LF | 2,0 Gew.-% |
| | Vernetzer | Imprafix 2794 | 6,0 Gew.-% |
| | Verdicker | Ortegol PV 301 | 0,6 Gew.-% |
| Kernschicht PUD 6 | PU-Dispersion | Impranil DL 1116 | 97,4 Gew.-% |
| | Vernetzer | Imprafix 2794 | 2,0 Gew.-% |
| | Verdicker | Ortegol PV 301 | 0,6 Gew.-% |

Tabelle 3: Rezepturen der in den (Vergleichs-)Beispielen hergestellten Klebemasseschichten

| Klebemasse- Bezeichnung | Komponente | Rohstoff | Anteil |
|---|---|---|---|
| Haftklebemasseschicht A | Synthesekautschuk | Kraton 1152 | 48,6 Gew.-% |
| | Harzteil | Dercolyte A115 | 45,7 Gew.-% |
| | | Wingtack 10 | 3,0 Gew.-% |
| | Alterungsschutzmittel | Irganox 1010 | 1,2 Gew.-% |
| | Mikroballons | Expancel 920 DU20 | 1,5 Gew.-% |
| Haftklebemasseschicht B **(Vgl.)** | Polyacrylat | Acrylsäure | 3,0 Gew-% |
| | | Ethylhexylacrylat | 50,0 Gew.-% |
| | | Butylacrylat | 47,0 Gew-% |
| | Vernetzer | Erisys GA 240 | 0,025 Gew-% |
| | | Aluminium-acetylacetonat | 0,05 Gew-% |
| | Mikroballons | Expancel 920DU20 | 0,75 Gew.-% |
| Haftklebemasseschicht C | Synthesekautschuk | Kraton 1118 | 66,7 Gew.-% |
| | | Kraton 1116 | 32,3 Gew.-% |

(fortgesetzt)

| Klebemasse- Bezeichnung | Komponente | Rohstoff | Anteil |
|---|---|---|---|
| Polyacrylat/ Synthesekautschuk (Gew.-% gesamt; Gew.-Verhältnis) 79; 3:1 | Harzteil | Dercolyte A115 | 20,2 Gew.-% |
| | Polyacrylat | Acrylsäure | 3,0 Gew-% |
| | | Methylacrylat | 20,0 Gew.-% |
| | | Butylacrylat | 47,0 Gew-% |
| | | Phenoxyethylacrylat | 30,0 Gew.-% |
| | Vernetzer | Erisys GA 240<br>Aluminium-acetylacetonat | 0,035 Gew-%<br>0,05 Gew-% |
| | Mikroballons | Expancel 920 DU20 | 0,75 Gew.-% |

Tabelle 4 zeigt den Aufbau der Klebebänder der (Vergleichs-)Beispiele, die durch Kombination der vorstehend genannten Träger aus Tabelle 2 und Haftklebemassen aus Tabelle 3 gebildet sind. Die Klebebänder sind jeweils doppelseitig, d.h. auf dem Träger ist jeweils beidseitig eine Haftklebemasseschicht angeordnet.

Tabelle 4: Aufbau der Klebebänder der (Vergleichs-)Beispiele

| Beispiel | Träger | | Haftklebemassenschicht | | Klebeband |
|---|---|---|---|---|---|
| | Variante | Dicke | Bezeichnung (jew. beidseitig) | Dicke | Dicke |
| | | [μm] | | [μm] | [μm] |
| | | | | | |
| **1** (Vgl.) | TPU 1 | 50 | A | 50 | 150 |
| | | | | | |
| **2** (Vgl.) | PUD 1 | 50 | A | 50 | 150 |
| **3** (Vgl.) | PUD 2 | 50 | A | 50 | 150 |
| **4** | PUD 3 | 50 | A | 50 | 150 |
| **5** | PUD 4 | 50 | A | 50 | 150 |
| **6** | PUD 5 | 50 | A | 50 | 150 |
| **7** | PUD 6 | 50 | A | 50 | 150 |
| **8** (Vgl.) | PUD 6 | 50 | B | 50 | 150 |

(fortgesetzt)

| Beispiel | Träger | | Haftklebemassenschicht | | Klebeband |
|---|---|---|---|---|---|
| | Variante | Dicke | Bezeichnung (jew. beidseitig) | Dicke | Dicke |
| | | [μm] | | [μm] | [μm] |
| **9** | PUD 4 | 50 | C | 50 | 150 |

Die Herstellung der einzelnen Klebebänder wurde folgendermaßen durchgeführt:

Herstellung der Klebebänder mit TPU-Kernschicht TPU 1 (Beispiel 1):

Die zugekauften Prozesshilfsmittel-haltigen TPU-Kernschichten TPU 1 werden beidseitig mit der Haftklebemasseschicht A kaschiert. Vor der Laminierung der TPU-Kernschichten TPU 1 mit den Haftklebemasseschichten wird jeweils der PE-Stützträger von der TPU-Kernschicht abgezogen. Die Haftklebemasseschichten weisen auf beiden Seiten des Trägers die gleiche Dicke auf. Die Mikroballons liegen in der Haftklebemasseschicht A noch unexpandiert vor, d.h. die Haftklebemasseschicht A ist noch nicht geschäumt.

Der Gesamtverbund aus Träger und Haftklebemasseschichten wird jeweils zur besseren Verankerung und Schäumung der Haftklebemasseschichten einem weiteren Temperierungsschritt unterzogen. Das aufgewickelte Material wird dazu bei einem Temperaturprofil mit drei Zonen von 120°C/135°C/170°C und bei einer Bahngeschwindigkeit von 6m/min durch eine Kanalanlage gefahren und anschließend wieder aufgewickelt. Es ergibt sich ein geschäumtes doppelseitiges Klebeband mit einer TPU-Kernschicht TPU 1.

Herstellung der Klebebänder mit PUD-Kernschichten PUD 1 bis PUD 6 (Beispiele 2 bis 9):

Falls ein Verdicker eingesetzt wird, erfolgt die Abmischung der Polyurethan-Dispersion (PU-Dispersion, PUD) mit dem Verdicker über eine herkömmliche vertikale Rührapparatur mit einem Visco Jet-Rührer. Die Polyurethan-Dispersion wird in diesem Fall in einem ausreichend großen Behälter vorgelegt und vorsichtig gerührt. Eine Bildung von Tromben oder jegliches Einrühren von Luft soll im gesamten Abmischprozess vermieden werden. Alle weiteren Bestandteile wie die Vernetzerlösung, die Farbstofflösung und die Verdickerlösung wurden der vorgelegten Polyurethan-Dispersion unter stetigem Rühren portionsweise zugeführt. Um eine homogene Mischung zu erhalten, wird eine Rührdauer von mind. 30 Minuten eingehalten. Die so angesetzte, angedickte Polyurethan-Dispersion wird optimalerweise einen Tag vor der Beschichtung hergestellt. Eingerührte Luftbläschen können somit noch entweichen. Nun können die abgemischten Polyurethan-Dispersionen bzw. Polyurethan-Dispersionen ohne zugesetzten Verdicker über eine Beschichtungsanlage, d.h. ein Auftragswerk, mit Trockenkanal beschichtet werden. Tabelle 5 zeigt relevante Parameter der Beschichtungsanlage und des Trockenkanals. Die hergestellten PUD-Kernschichten sind, abgesehen von Tensid, frei von Prozesshilfsmitteln und weisen keine kristalline Überstruktur auf.

Tabelle 5: relevante Parameter der Beschichtungsanlage und des Trockenkanals

| | Auftraqswerk | | | | Trocknungsparameter | | | | | | | |
|---|---|---|---|---|---|---|---|---|---|---|---|---|
| | Schlauch | Beschichtungswalze | Rakel | v | **T1** | **T2** | **T3** | **T4** | **T5** | **T6** | **T7** | **T8** |
| | [°C] | [°C] | | [m/min] | [°C] | [°C] | [°C] | [°C] | [°C] | [°C] | [°C] | [°C] |
| PUD 1-6 | 20 | 20 | Komma | 20,0 | 90 | 90 | 110 | 130 | 150 | 150 | 150 | 45 |

Über zwei Abwickler wird entweder ein PET-Träger mit Releasefunktion oder eine vorgefertigte Funktionsschicht, d.h. Haftklebemasseschicht, auf PET-Träger mit Releasefunktion bereitgestellt. Es hat sich bewährt, die gewünschte Schichtdicke auf PET-Träger einzustellen und dann auf die vorgefertigte Haftklebemassenschicht zu wechseln und direkt zu beschichten. Vor der Aufwicklung wird dann über eine regelbare Andruckwalze die zweite Haftklebemassenschicht, die die gleiche Dicke aufweist wie die erste Haftklebemasseschicht, dazu kaschiert.

Das so hergestellte Dreischicht-Produkt wird nun aufgewickelt. Der Gesamtverbund aus PU-Träger und Haftklebemasseschichten wird zur Optimierung der Zugfestigkeit des Trägers, zur besseren Verankerung und, falls die Haftklebemasseschichten unexpandierte Mikroballons enthalten, zur Schäumung der Haftklebemasseschichten einem weiteren Temperierungsschritt unterzogen. Das aufgewickelte Material wird dazu bei einem Temperaturprofil mit drei

Zonen von 120°C/135°C/170°C und bei einer Bahngeschwindigkeit von 6m/min durch die gleiche Kanalanlage gefahren und anschließend wieder aufgewickelt. Es ergeben sich die doppelseitigen Klebebänder mit den PUD-Kernschichten PUD 1 bis PUD 6.

Ergebnisse:

Tabelle 6 zeigt die mechanischen Eigenschaften der hergestellten Klebebänder, sowie der darin enthaltenen Träger.

Tabelle 6: mechanische Eigenschaften Klebebänder

| Bsp. | Träger | Haftklebemas se | Kleb e- band | Träger | | | Produkt | | | |
|---|---|---|---|---|---|---|---|---|---|---|
| | Variant e | Bezeichnung (jew. Beidseitig) | Dick e | Reiß- dehnun g | Kraft bei 400% | Höchstzu g-kraft | Strippkraft | Bruchkraft | DuPo nt z | Reiß er 90° |
| | | | [µm] | [%] | [N/mm $^2$] | [N/mm$^2$] | [N/mm $^2$] | [N/mm $^2$] | [mJ] | [%] |
| | | | | | | | | | | |
| **1 (Vgl.)** | TPU 1 | A | 150 | 687 | 20,4 | 34,0 | 9,5 | 14,6 | 554 | 100 |
| **2 (Vgl.)** | PUD 1 | A | 150 | 967 | 3,5 | 31,6 | 7,3 | 13,7 | 723 | 50 |
| **3 (Vgl.)** | PUD 2 | A | 150 | 901 | 3,8 | 35,7 | 7,5 | 14,0 | 715 | 50 |
| **4** | PUD 3 | A | 150 | 935 | 4,0 | 37,4 | 8,0 | 17,3 | 702 | 20 |
| **5** | PUD 4 | A | 150 | 927 | 4,1 | 45,0 | 7,7 | 20,7 | 698 | 0 |
| **6** | PUD 5 | A | 150 | 762 | 6,5 | 40,8 | 8,6 | 17,7 | 547 | 50 |
| **7** | PUD 6 | A | 150 | 949 | 3,9 | 38,9 | 7,4 | 16,7 | 708 | 0 |
| **8 (Vgl.)** | PUD 6 | B | 150 | 949 | 3,9 | 38,9 | 10,2 | 13,5 | 589 | 100 |
| **9** | PUD 4 | C | 150 | 927 | 4,1 | 45,0 | 6,5 | 21,3 | 717 | 0 |

Beispiele 2-7:

Die erfindungsgemäße Verwendung von Kernschichten (Trägern) auf Basis von vernetzten PU-Trägern, insbesondere auch Basis von vernetzen PUD-Trägern, hat sich als besonders vorteilhaft herausgestellt, da sich hier ein besonders vorteilhaftes Verhältnis von der Kraft bei 400% Dehnung, der $F_{400\%}$, dem typischen Dehnungsbereich während des Stripp-Vorgangs im Bauteil, zur Höchstzugkraft einstellen lässt. D.h. die Kraft während des Strippvorgangs, $F_{400\%}$ ist im Gegensatz zum Vergleichsbeispiel 1 besonders niedrig, bei gleichzeitig hoher Höchstzugkraft, was wiederum zu einer sehr guten Reißerbeständigkeit führt. Weiterhin lassen sich höhere Schock-Eigenschaften mit den erfindungsgemäßen Trägern erreichen.

Überraschenderweise und für den Fachmann nicht vorhersehbar konnte durch die Verwendung eines Vernetzers die Höchstzugkräfte nochmals deutlich gesteigert werden bei gleichzeitig geringer $F_{400\%}$ und unter Beibehaltung der guten Schock-Eigenschaften, was wiederum zu einer nochmals verbesserten Reißerbeständigkeit führt. So konnte gegenüber den Vergleichsbeispielen 2 und 3, in denen kein Vernetzer eingesetzt wurde, eine weitere Steigerung der Höchstzugkraft erreicht werden, ohne dass es zu einer signifikanten Steigerung der $F_{400\%}$ kam.

Beispiel 8 (Vgl.):

Wie Beispiel 8 zeigt hat sich insbesondere in Kombination mit dem erfindungsgemäß vernetzen Träger die Verwendung einer Styrolblockcopolymer-basierten Haftklebemasse als vorteilhaft erwiesen. Die Verwendung einer acrylat-basierten Haftklebemasse führte insbesondere bezüglich der Reißerbeständigkeit zu deutlich schlechteren Ergebnissen.

Beispiel 9:

Wie Beispiel 9 zeigt hat sich insbesondere in Kombination mit dem erfindungsgemäß vernetzen Träger die Verwendung einer Polymerblend-basierten Haftklebemasse (Polymerbasis auf Vinylaromatenblockpolymer und Acrylat) als vorteilhaft erwiesen.

*Prüfmethoden*

Alle Messungen werden, sofern nichts anderes angegeben ist, bei 23 °C und 50 % relativer Luftfeuchtigkeit durchgeführt. Die mechanischen und klebtechnischen Daten wurden wie folgt ermittelt:

*Reißertest mittels Zugprüfmaschine, Zwick*

Im Reißertest werden eine erste Prüfplatte aus Polyethylen und eine zweite Prüfplatte aus Stahl eingesetzt. Die erste Prüfplatte aus Polyethylen ist mit einem doppelseitigen Klebeband tesa® 67215 umwickelt worden, auf das anschließend eine "Batteriefolie" aufgebracht worden ist. Das Klebeband tesa® 67215 ist insgesamt 150 µm dick und enthält einen Polyurethanträger, auf dem beidseitig jeweils eine geschäumte Haftklebemasseschicht auf Basis von Vinylaromatenblockcopolymer angeordnet ist. Bei der "Batteriefolie" handelt es sich um eine mit Aluminium laminierte Polymerfolie einer Dicke von 88 µm des Herstellers DNP - die Folie wird typischerweise zur Herstellung von Lithium-Polymer-Batterien eingesetzt.

Aus dem zu untersuchenden Klebeband werden Prüflinge mit 8 mm Breite und 60 mm Länge gestanzt oder gelasert. Diese Prüflinge werden auf einer Länge von 50 mm auf die wie vorstehend beschrieben mit Batteriefolie umwickelte erste Prüfplatte aus Polyethylen geklebt, so dass ein 10 mm langer Anfasser übersteht. Der Anfasser wird beidseitig mit 36 µm PET eingedeckt. Die zweite Prüfplatte aus Stahl wird, nach einer Reinigung mit Aceton und Vorkonditionierung für 1 bis höchstens 10 min bei 23 °C und 50 % relativer Luftfeuchtigkeit, derart auf die Gegenseite des verklebten Streifens (d.h. Prüflings) geklebt, dass die beiden Prüfplatten bündig, d.h. deckungsgleich, übereinander liegen. Der Verbund wird rückseitig über die Stahlplatte mit einer 4 kg Rolle 10-fach überrollt (jeweils fünfmal hin und zurück). Nach mindestens 4 h Aufziehzeit bei 23 °C und 50 % relativer Luftfeuchtigkeit werden die Streifen am Anfasser mittels einer Zugprüfmaschine (der Firma Zwick) bei einer konstanten Geschwindigkeit von 800 mm/min in einem Winkel von 90° über die Kante der mit Batteriefolie umwickelten ersten Prüfplatte aus Polyethylen aus der Klebefuge gestrippt. Der Probenkörper wird dabei mit einem winkelverstellbaren Adapter fixiert und der Anfasser wird senkrecht in die Mitte der Klemmbacken eingespannt.

Es wird bei einem Winkel von 90° gemessen und es wird währenddessen die Kraft, die zum Herauslösen / Strippen der Probe kontinuierlich benötigt wird, durch die Zugprüfmaschine aufgenommen - die sogenannte Strippkraft $F_{Stripp}$.Die Messung ist beendet, sobald die Probe komplett zwischen den beiden Prüfplatten herausgestrippt wurde oder die Probe während der Messung gerissen ist. Es werden mindestens 6 Messungen pro Muster durchgeführt. Das

Prüfklima beträgt 23 °C und 50 % rel. Luftfeuchtigkeit.

Angabe der Ergebnisse:

Reißer 90° - der Test gilt als bestanden, wenn während des Strippvorgangs weniger als 20% der Prüflinge reißen.

$F_{Stripp}$ 90° [N/cm] - benötigte Kraft, um den Prüfling aus der Klebefuge zu strippen bei Winkel 90° (Strippkraft)

*Zugversuch mittels Zugprüfmaschine, Zwick*

Aus der zu untersuchenden Probe (Klebeband, d.h. vorzugsweise beidseitig mit Klebmasse ausgerüsteter Träger, oder nur Rohträger) werden in Längsrichtung mittels Streifenschneider oder Rasierklingenmesser 15 mm breite Streifen mit einer Länge von ca. 150 mm geschnitten. Die im Prüfklima 24h vorkonditionierte Probe wird senkrecht in die Mitte der Klemmbacken mit einer Einspannlänge von 10 mm eingespannt und solange mit einer Geschwindigkeit von 800 mm/min gedehnt, bis er reißt. Der Riss soll etwas in der Mitte des Streifens erfolgen. Erfolgt der Riss in Backennähe (näher als 1cm), so ist der Wert zu verwerfen und dafür ein weiterer Streifen zu prüfen. Pro Probenvariante werden 5 Messungen durchgeführt. Das Prüfklima beträgt 23 °C und 50 % rel. Luftfeuchtigkeit. Die Messungen erfolgen in Anlehnung an die EN ISO 527.

Angabe der Ergebnisse:

$F_{x\%}$ [N/cm], [N/mm²] – Kraft bei x % Dehnung

$F_{Bruch}$ [N/cm], [N/mm²] – Kraft bei Riss/ Bruch der Probe (d.h. Reißfestigkeit)

RD [%] – Reißdehnung, d.h. prozentuale Dehnung bei Riss/ Bruch der Probe

*Durchschlagzähigkeit, d.h. DuPont-Test in z-Ebene*

Aus dem zu untersuchenden Klebeband wird eine quadratische, rahmenförmige Probe ausgeschnitten (Außenmaße 33 mm x 33 mm, Stegbreite 2,0 mm, Innenmaße (Fensterausschnitt) 29 mm x 29 mm). Diese Probe wird auf einen Polycarbonat-(PC)-Rahmen (Außenmaße 45 mm x 45 mm, Stegbreite 10 mm, Innenmaße (Fensterausschnitt) 25 mm x 25 mm; Dicke 3 mm) geklebt. Auf der anderen Seite des doppelseitigen Klebebands wird ein PC-Fenster von 35 mm x 35 mm geklebt. Die Verklebung von PC-Rahmen, Klebebandrahmen und PC-Fenster erfolgt derart, dass die geometrischen Zentren und die Diagonalen jeweils übereinanderliegen (Eck-auf-Eck). Die Verklebungsfläche beträgt 248 $mm^2$. Die Verklebung wird für 5 s mit 248 N gepresst und für 24 Stunden konditioniert bei 23 °C / 50 % relativer Feuchte gelagert.

Unmittelbar nach der Lagerung wird der Klebeverbund aus PC-Rahmen, Klebeband und PC-Fenster mit den überstehenden Kanten des PC-Rahmens derart in eine Probenhalterung gespannt, dass der Verbund waagerecht ausgerichtet ist. Dabei liegt der PC-Rahmen an den überstehenden Kanten auf der Probenhalterungen plan auf, so dass das PC-Fenster unterhalb des PC-Rahmens frei schwebend (durch das Klebebandmuster gehalten) vorliegt. Die Probenhalterung wird anschließend in die vorgesehene Aufnahme des "DuPont Impact Tester" zentrisch eingesetzt. Der 150 g schwere Schlagkopf wird so eingesetzt, dass die kreisförmige Aufschlaggeometrie mit dem Durchmesser 24 mm auf die von oben frei zugängliche Fläche des PC-Fensters zentrisch und bündig aufliegt.

Auf den so angeordneten Verbund aus Probenhalterung, Probe und Schlagkopf wird senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wird in 5 cm Schritten so lange erhöht, bis die eingebrachte Stoßenergie die Probe durch die Durchschlagbelastung zerstört und das PC-Fenster sich vom PC-Rahmen löst.

Um Versuche mit unterschiedlichen Proben vergleichen zu können, wird die Energie wie folgt berechnet:

$$\text{Energie } E\,[J] = \text{Höhe } [m] * \text{Masse Gewicht } [kg] * 9{,}81\ kg/m*s^2$$

Es werden fünf Proben pro Produkt getestet und der Energiemittelwert als Kennzahl für die Durchschlagzähigkeit angegeben.

*Shore-Härte A*

Die Shore-Härte A einer Probe wird gemäß ASTM D2240 ermittelt.

*Modul bei 100% Dehnung, Reißdehnung*

Das Modul bei 100% Dehnung bzw. die Reißdehnung einer Probe werden gemäß DIN 53504 ermittelt.

*Dicke*

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Klebemasseschicht lässt sich auch die Dicke eines Klebebands (Klebestreifens) bzw. eines Trägers analog über handelsübliche Dickenmessgeräte (Taster-Prüfgeräte) mit Genauigkeiten von weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

*Dichte*

Die Dichte der ungeschäumten und der geschäumten Klebemasseschichten wird ermittelt durch Quotientenbildung aus Masseauftrag und Dicke der auf einen Liner aufgetragenen Klebemassenschicht.

Der Masseauftrag kann durch Bestimmung der Masse eines bezüglich seiner Länge und seiner Breite definierten Abschnitts einer solchen auf einen Liner aufgetragenen Klebemassenschicht bestimmt werden, abzüglich der (bekannten oder separat ermittelbaren) Masse eines Abschnitts gleicher Dimensionen des verwendeten Liners.

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Die Dichte eines Trägers lässt sich analog bestimmen.

*Molekulargewicht $M_n$, $M_w$*

Die Angaben des zahlenmittleren Molekulargewichts $M_n$ bzw. gewichtsmittleren Molekulargewichts $M_w$ in dieser Schrift beziehen sich auf die Bestimmung per Gelpermeationschromatographie (GPC). Die Bestimmung erfolgt an 100 μl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 μm, 103 Å, 8,0 mm * 50 mm (Angaben hier und im Folgenden in der Reihenfolge: Typ, Partikelgrösse, Porosität, mInnendurchmesser * Länge; 1 Å = 10-10 m) verwendet. Zur Auftrennung wird eine Kombination der Säulen des Typs PSS-SDV, 5 μm, $10^3$ Å sowie $10^5$ Å und $10^6$ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei polaren Molekülen wie zum Beispiel den Ausgangsstoffen des Polyurethans gegen PMMA-Standards (Polymethylmethacrylat-Kalibrierung) und sonst gegen PS-Standards (Polystyrol-Kalibrierung).

*Klebharzerweichungstemperatur*

Die Klebharzerweichungstemperatur wird nach der einschlägigen Methodik durchgeführt, die als Ring & Ball bekannt ist und nach ASTM E28 standardisiert ist.

*DACP*

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5%, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99%, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

## Patentansprüche

**1.** Durch Dehnung lösbares Klebeband, umfassend:

a) mindestens einen Träger auf Basis eines vernetzten Polyurethans; und
b) mindestens eine Haftklebemasseschicht auf Basis von Vinylaromatenblockcopolymer.

**2.** Klebeband gemäß Anspruch 1, **dadurch gekennzeichnet, dass** das Polyurethan ein aus Extrusion (TPU) hergestelltes Polyurethan oder ein aus Dispersion (PUD) hergestelltes Polyurethan ist.

**3.** Klebeband gemäß wenigstens einem der vorangehenden Ansprüche, **dadurch gekennzeichnet, dass** zur Vernetzung des Polyurethans ein Vernetzer auf Basis von Azeridin, Carbodiimid, Melamin oder Isocyanat verwendet wird, insbesondere ein Vernetzer auf Basis von Isocyanat.

**4.** Klebeband gemäß wenigstens einem der vorangehenden Ansprüche, **dadurch gekennzeichnet, dass** der Vernetzer in einer Menge von 0,5 bis 10 Gew.-%, vorzugsweise 1,0 bis 8,0 Gew.-% und insbesondere 1,5 bis 5 Gew.-% eingesetzt wird, jeweils bezogen auf das Gesamtgewicht des Trägers.

**5.** Klebeband gemäß wenigstens einem der vorangehenden Ansprüche, **dadurch gekennzeichnet, dass** der Träger geschäumt ist, insbesondere durch Mikroballons.

**6.** Klebeband gemäß wenigstens einem der vorangehenden Ansprüche, **dadurch gekennzeichnet, dass** es sich bei dem Vinylaromatenblockcopolymer um StyrolButadien-Blockcopolymer handelt.

**7.** Klebeband gemäß wenigstens einem der vorangehenden Ansprüche, **dadurch gekennzeichnet, dass** die Haftklebemasseschicht geschäumt ist, insbesondere durch Mikroballons.

**8.** Klebeband gemäß wenigstens einem der vorangehenden Ansprüche, **dadurch gekennzeichnet, dass** die Haftklebemasseschicht beidseitig auf dem Träger angeordnet ist, so dass das Klebeband ein doppelseitiges Klebeband ist.

**9.** Klebeband gemäß wenigstens einem der vorangehenden Ansprüche, **dadurch gekennzeichnet, dass** das Klebeband eine Dicke von 30 bis 350 μm, vorzugsweise 30 bis 250 μm, insbesondere 50 bis 200 μm aufweist.

**10.** Klebeband gemäß wenigstens einem der vorangehenden Ansprüche, **dadurch gekennzeichnet, dass** das Klebeband ein Verhältnis von Strippkraft $F_{Stripp}$ zu Bruchkraft $F_{Bruch}$ von weniger als 60 %, vorzugsweise weniger als 50 % aufweist.

**11.** Verfahren zur Herstellung eines Klebebands gemäß wenigstens einem der Ansprüche 1 bis 10, bei dem ein vernetzbares Polyurethan

(i) auf einen temporären Träger extrudiert wird und mindestens einseitig, vorzugsweise beidseitig, mit einer Haftklebemasseschicht auf Basis von Vinylaromatenblockcopolymer kombiniert wird, oder
(ii) auf eine Haftklebemasseschicht auf Basis von Vinylaromatenblockcopolymer unter Erhalt eines Trägers

extrudiert wird, wobei vorzugsweise der Träger auf der der Haftklebemasseschicht gegenüberliegenden Seite mit einer weiteren Haftklebemasseschicht auf Basis von Vinylaromatenblockcopolymer kombiniert wird,

so dass sich ein Klebeband ergibt.

**12.** Verfahren zur Herstellung eines Klebebands gemäß wenigstens einem der Ansprüche 1 bis 10, bei dem eine Dispersion auf Basis eines Polyurethans und eines Vernetzers

(i) auf einen temporären Träger beschichtet oder getrocknet wird und der sich ergebende Träger mindestens einseitig, vorzugsweise beidseitig, mit einer Haftklebemasseschicht auf Basis von Vinylaromatenblockcopolymer kombiniert wird, oder
(ii) auf eine Haftklebemasseschicht auf Basis von Vinylaromatenblockcopolymer unter Erhalt eines Trägers beschichtet und getrocknet wird, wobei vorzugsweise der Träger auf der der Haftklebemasseschicht gegenüberliegenden Seite mit einer weiteren Haftklebemasseschicht auf Basis von Vinylaromatenblockcopolymer kombiniert wird,

so dass sich ein Klebeband ergibt.

**13.** Verwendung eines Klebebands gemäß wenigstens einem der Ansprüche 1 bis 10 zur Verklebung von Bauteilen in elektronischen Geräten.

**14.** Elektronisches Gerät umfassend ein erstes Bauteil und ein zweites Bauteil, die mit einem Klebeband gemäß wenigstens einem der Ansprüche 1 bis 10, verklebt sind.

Europäisches Patentamt
European Patent Office
Office européen des brevets

# EUROPÄISCHER RECHERCHENBERICHT

Nummer der Anmeldung
EP 22 19 2831

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2015 206076 A1 (TESA SE [DE]) 6. Oktober 2016 (2016-10-06)<br>* Absätze [0080], [0082], [0085], [0091], [0092], [0105] - [0140]; Ansprüche 1, 5, 18, 22 *<br>----- | 1,2, 5-11,13, 14 | INV.<br>C09J7/25<br>C09J7/38<br>C08K5/00 |
| X | DE 10 2018 215651 A1 (TESA SE [DE]) 19. März 2020 (2020-03-19)<br>* Absätze [0050], [0081], [0082], [0120], [0125]; Ansprüche 1, 9, 12, 15; Beispiele; Tabelle 2 *<br>----- | 1-5,8, 10,12-14 | |
| X | DE 10 2012 223670 A1 (TESA SE [DE]) 26. Juni 2014 (2014-06-26)<br>* Absätze [0004], [0032], [0038]; Ansprüche 1, 2, 5 *<br>----- | 1,6, 8-10,13, 14 | |
| | | | RECHERCHIERTE SACHGEBIETE (IPC) |
| | | | C09J<br>C08J |

Der vorliegende Recherchenbericht wurde für alle Patentansprüche erstellt

1

| Recherchenort | Abschlußdatum der Recherche | Prüfer |
|---|---|---|
| München | 19. Januar 2023 | Kahl, Philipp |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 19 2831

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-01-2023

| Im Recherchenbericht angeführtes Patentdokument | Datum der Veröffentlichung | Mitglied(er) der Patentfamilie | Datum der Veröffentlichung |
|---|---|---|---|
| DE 102015206076 A1 | 06-10-2016 | CN 108541268 A | 14-09-2018 |
| | | CN 110511695 A | 29-11-2019 |
| | | DE 102015206076 A1 | 06-10-2016 |
| | | EP 3277766 A1 | 07-02-2018 |
| | | JP 2018517002 A | 28-06-2018 |
| | | KR 20170134608 A | 06-12-2017 |
| | | TW 201641640 A | 01-12-2016 |
| | | US 2018079937 A1 | 22-03-2018 |
| | | WO 2016156305 A1 | 06-10-2016 |
| DE 102018215651 A1 | 19-03-2020 | CN 110903453 A | 24-03-2020 |
| | | DE 102018215651 A1 | 19-03-2020 |
| | | EP 3623400 A1 | 18-03-2020 |
| | | US 2020091472 A1 | 19-03-2020 |
| DE 102012223670 A1 | 26-06-2014 | CN 104919017 A | 16-09-2015 |
| | | DE 102012223670 A1 | 26-06-2014 |
| | | DE 202013012781 U1 | 18-07-2019 |
| | | DE 202013012782 U1 | 26-07-2019 |
| | | DE 202013012803 U1 | 24-10-2019 |
| | | EP 2935498 A1 | 28-10-2015 |
| | | EP 3578618 A1 | 11-12-2019 |
| | | JP 6379108 B2 | 22-08-2018 |
| | | JP 2016504449 A | 12-02-2016 |
| | | KR 20150097696 A | 26-08-2015 |
| | | KR 20190002085 U | 14-08-2019 |
| | | KR 20190092625 A | 07-08-2019 |
| | | KR 20200013125 A | 05-02-2020 |
| | | TW 201430094 A | 01-08-2014 |
| | | US 2015337177 A1 | 26-11-2015 |
| | | WO 2014095382 A1 | 26-06-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0816459 A
- DE 102015206076
- DE 102016223852
- WO 2015135134 A


### In der Beschreibung aufgeführte Nicht-Patentliteratur


- **P. E. HINKAMP.** *Polymer,* 1967, vol. 8, 381
- *CHEMICAL ABSTRACTS,* 1330-20-7
- *CHEMICAL ABSTRACTS,* 123-42-2